# EUROPÄISCHE PATENTSCHRIFT

(11) **EP 1 447 770 B1**
(45) Veröffentlichungstag und Bekanntmachung des Hinweises auf die Patenterteilung: **09.10.2013**
(21) Anmeldenummer: 04002391.3
(22) Anmeldetag: 04.02.2004
(51) Int. Cl.: G06T 7/00, G06T 19/00, B25J 9/16

(54) **Verfahren und Vorrichtung zur Visualisierung rechnergestützter Informationen**
Method and apparatus for visualization of computer-based information
Procédé et système de visualisation d'information assisté par ordinateur

(30) Priorität: 11.02.2003 DE 10305384
(43) Veröffentlichungstag der Anmeldung: 18.08.2004
(73) Patentinhaber: KUKA Laboratories GmbH, 86165 Augsburg (DE)
(72) Erfinder: Kazi, Arif, Dr., 86150 Augsburg (DE); Bischoff, Rainer, 86163 Augsburg (DE); Kuepeli, Bahadir, 86179 Augsburg (DE)
(74) Vertreter: Patentanwälte Funk & Böss GbR

(56) Entgegenhaltungen:
- EP-A- 0 840 909
- WO-A-00/52536
- DE-A1- 10 128 015
- US-A1- 2002 082 498
- US-A1- 2003 012 410
- MILGRAM P ET AL: "Applications of augmented reality for human-robot communication" INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US, Bd. 3, 26. Juli 1993 (1993-07-26), Seiten 1467-1472, XP010219274 ISBN: 0-7803-0823-9

## Beschreibung

Die Erfindung betrifft ein Verfahren und eine Vorrichtung zum Visualisieren rechnergenerierter Informationen.

Aus der WO 00/52536 ist es bekannt, rechnergenerierte Informationen, wie insbesondere technische Teile betreffende Datenbank- oder Zustandsinformationen zusammen mit einem realen Bild des entsprechenden technischen Teils auf einer Anzeige, insbesondere in textlicher Form, darzustellen. Die gemeinsame Darstellung von realen Bildern und rechnergenerierter Informationen wird als Augmented Reality (AR), also erweiterte Realität, bezeichnet.

Die DE 101 28 015 A1 betrifft ein Verfahren und ein System zum Planen einer veränderten Produktionsumgebung, insbesondere einer Fertigungsumgebung für Fahrzeugkomponenten, insbesondere für Automobile. Ausgehend von einer real existierenden Fertigungsumgebung, werden virtuelle Planungsergebnisse erzeugt und mit Hilfe eines Augmented Reality AR-Systems mit der realen Fertigungsumgebung überlagert.

Die US 2003/012410A1 befasst sich mit einem Verfahren zur Augmentierung bei dem die Position und Orientierung einer Kamera mittels eines Trackingsystems bestimmt wird.

In einer Veröffentlichung von Milgram et al. mit dem Titel "Applications of augmented reality for human-robot communication" wird eine virtuelle Linie in ein Bild eines Roboters eingeblendet. Die dortige eingeblendete Linie stellt ein virtuelles Maßband dar, das Abstände zwischen einem Roboter und einem Werkstück messen kann.

Früher wurden Industrieroboter meist im Rahmen ihrer Inbetriebnahme einmal programmiert und verrichteten anschließend jahrelang ohne Änderung die gleiche Aufgabe. Im Rahmen einer flexibleren Automatisierung fällt die Um- und Neu-Programmierung selbst als Zeit- und Kostenfaktor stärker ins Gewicht.

Um einen Roboter in eine vorgegebene Position oder schlicht aus dem Weg zu bewegen, kann er manuell, insbesondere von einem Benutzer über Verfahrenstasten oder auch über eine sogenannte 6D-Maus gesteuert) verfahren werden. Die Bewegungsrichtung des Roboters ist dabei vom gewählten Bezugskoordinatensystem abhängig. Für den Bediener ist nicht immer unmittelbar klar, welches Bezugskoordinatensystem angewählt ist bzw. wie dieses im Raum ausgerichtet ist. Häufig wird in der Praxis vorsichtig probiert, ob sich der Roboter in die gewünschte Richtung bewegt. Ein Irrtum kann größeren Schaden oder sogar Verletzungen von Personen zur Folge haben.

In besonderem Maße trifft dies auf Bediener mit wenig Robotererfahrung zu, da die Vorstellung von Bezugskoordinatensystemen bei Problemen ein Wissen voraussetzt, das ein Roboteranwender haben muss, um effektiv mit einem Robotersystem arbeiten zu können. Es ist allerdings häufig schwierig, "Roboterneulingen" dieses verständlich zu machen, da diese in der Regel nicht über die entsprechende mathematische Vorbildung verfügen.

Heute erfolgt die Vermessung der Spitze eines Werkzeugs (Tool Center Point - TCP) an einem Industrieroboter meist manuell. So wird z.B. ein vorgegebener Punkt mehrfach mit der Werkzeugspitze aus verschiedenen Richtungen angefahren, die entsprechenden Roboterpositionen werden abgespeichert und daraus wird die Position und gegebenenfalls Orientierung der Werkzeugspitze gegenüber dem Flansch der Roboterhand ermittelt. Auch die Vermessung von Werkstücken, d.h. die Festlegung von Basiskoordinationssystemen, erfolgt auf ähnliche Weise.

Abhängig vom Einsatzzweck des Robotersystems (Art des Werkzeugs - Schweißgerät, Schneid-, Klebewerkzeug, etc. - und dessen Ausrichtung zum Werkstück) muss der Roboteranwender ein bestimmtes Vermessungsverfahren auswählen. Wenn beispielsweise der Nullpunkt des zu vermessenden Werkstückkoordinatensystems außerhalb des Arbeitsraumes des Roboters liegt, muss indirekt über bekannte Punkte im Raum vermessen werden. Ein anderes Vermessungsverfahren ist auszuwählen, wenn das zu bearbeitende Werkstück an einem am Roboterflansch befestigten Greifer geführt wird. Um alle Einsatzfälle abzudecken, sind inzwischen über 18 verschiedene Vermessungsverfahren bekannt. Meist ist einem Roboteranwender selbst nach einer umfassenden Schulung nicht klar, welche Vermessungsmethode er in einem bestimmten Fall anwenden soll. Selbst erfahrene Anwender stoßen bei neuen Konfigurationen, wie andere "Werkzeuge" und/oder "Werkstücke" auf wissensdefizite, zumal Vermessungen selten durchgeführt werden.

Die Vermessungsprozedur kann sich sehr komplex gestalten und ist mit einem hohen Zeitaufwand verbunden. Im häufig vorkommenden Fall eines vom Roboter geführten Werkstücks bei stationärem Werkzeug muss z.B. eine dreifache Vermessung von Positionen und anschließend gegebenenfalls noch eine Bestimmung der Orientierung durchgeführt werden. Es ist eine sorgfältige Arbeitsweise erforderlich, da eine ungenaue Positionierung dazu führen kann, dass ein Vermessungsverfahren keine oder unzulässige Ergebnisse liefert. Die mangelnde Sichtbarkeit des Vermessungsergebnisses führt darüber hinaus zu einer Unsicherheit, ob ein gutes Vermessungsergebnis vorliegt, oder ob dieses etwa durch Verfahrensfehler, Fehleingaben o.ä. verfälscht wurde.

Roboterprogramme werden heute häufig durch "Teachen", also "Lehren" erstellt, indem der Roboter manuell auf die Zielposition einer Bewegung verfahren und der entsprechende Bahnpunkt dann abgespeichert wird. Auch die Bahnpunkte von "offline" in mittels einer Simulation erstellten Programme müssen meist noch nachträglich vor Ort "gelehrt" werden, da die Geometrie des Simulationsmodells und die reale Robotereinsatzumgebung selten genau genug übereinstimmen. Selbst beim Austausch einer defekten Robotermechanik gegen eine andere müssen die Bahnpunkte in einem Roboterprogramm häufig erneut "gelehrt" werden, da die neue Mechanik durch die Fertigungstoleranzen eine leicht unterschiedliche Geometrie aufweist.

Da sich Roboter nur sehr langsam bewegen dürfen, solange Menschen in der Nähe sind, und die Zielposition genau angefahren werden muss, ist das Teachen bzw. Nach-Teachen zeitraubend. Außerdem bleibt trotz der langsamen Verfahrenbewegung stets ein gewisses Risiko für Sach- und Personenschäden bestehen. Dieses Risiko existiert besonders auch bei neu (z.B. offline mittels einer Simulation) erstellten Roboterprogrammen, die der Programmierer zu Testzwecken auf dem Roboter ablaufen lässt.

Im Betrieb wird nach dem Auftreten eines Fehlers der Roboter häufig entlang der programmierten Bahn zurückgefahren. In solchen oder anderen komplexen Situationen ist das Verhalten des Robotersystems für den Nutzer nicht direkt vorhersehbar. Auch hier können Sach- oder Personenschäden die Folge sein.

Um Kollisionen auszuschließen, werden bei Robotersystemen Arbeitsbereich festgelegt, in die das Roboterwerkzeug oder der gesamte Roboter nicht eindringen dürfen bzw. die Roboterwerkzeug oder Roboter nicht verlassen dürfen. Andere Arbeitsbereiche werden von mehreren "kooperierenden" Robotersystemen und/oder anderen Anlagenkomponenten und/oder den menschlichen Nutzen gemeinsam genutzt, so dass ihre Nutzung verwaltet werden muss.

Das Festlegen von Arbeitsbereichen in einer solchen Anlage setzt ein aufwändiges Vermessen voraus. Das Überprüfen bzw. Anpassen festgelegter Arbeitbereiche in der Anlage ist ebenfalls sehr umständlich, da eine optische Darstellung fehlt. In der Anlage ist nicht klar, ob und in welchen Bereichen sich die erreichbaren Arbeitsräume von Robotersystemen überlappen, so dass eine Kollisionsgefahr besteht.

Beim handgeführten Betrieb von Robotersystemen (Roboter als "Intelligent Assist Device", "Cobot") werden die Bewegungsfreiheitsgrade des Roboters häufig künstlich eingeschränkt, um die Tätigkeit des Nutzers zu erleichtern. Durch "virtuelle Führungsmechanismen" (engl. "virtual fixtures") wird der Effektor des Roboters beispielsweise steuerungstechnisch z.B. immer innerhalb einer Ebene geführt, in der Orientierung immer parallel zum Boden gehalten, o.ä.

Virtuelle Führungsmechanismen sind ein Spezialfall der Einschränkung des Arbeitsraums eines Robotersystems. Arbeitsräume sind Volumina, die das Robotersystem (oder ein Teil hiervon) nicht verlassen oder in welche es nicht eindringen darf. In speziellen Applikationen, in denen ein Roboter vom Nutzer am Werkzeug geführt wird, kann es sinnvoll sein, z.B. die Orientierung des Greifers softwaretechnisch festzusetzen, während die Position des Greifers im Raum immer noch frei vom Nutzer verändert werden kann. Ein Anwendungsfall ist der Einsatz eines Roboters als Fügehilfe in der Montage: Der Roboter trägt das (ggf. schwere und sperrige) Bauteil, der Nutzer kann es mit geringem Kraftaufwand bewegen. Das Bauteil hat dabei von vorne herein die Lage, in der es montiert werden soll. Ein anderer Anwendungsfall ist z.B. die Lackierung von Flächen, bei der der Roboter das Werkzeug (d.h. die Lackierpistole) in einem vorgegebenen Abstand zu der zu lackierenden Oberfläche hält, während der Nutzer die Lackierpistole über die Oberfläche führt. Solche gezielten softwaretechnischen Einschränkungen der Bewegungsmöglichkeiten werden als "virtuelle Führungsmechanismen" bezeichnet, weil sie ähnlich wie eine mechanische Zwangsführung des Robotergreifers wirken.

Die Information über Arbeitsräume oder virtuelle Führungsmechanismen liegen in der Robotersteuerung als abstraktmathematische Information vor.

Der virtuelle Führungsmechanismus kann in Abhängigkeit der vorliegenden Aufgabe dynamisch wechseln. Während der Programmierung Arbeitsräume oder virtuelle Führungsmechanismen festzulegen oder zu ändern übersteigt das erforderliche Vorstellungsvermögen vieler Nutzer, so dass dem Nutzer nicht unmittelbar ersichtlich ist, in welchen Richtungen eine Bahn- und/oder Drehbewegung des Roboter, genauer des Zentrums seines Arbeitswerkzeugs (Tool Center Print TCP) möglich bzw. gesperrt ist. Da er das Verhalten des Robotersystems nicht vorhersagen kann, ist er verunsichert. Durch falsche Handhabung, wie beispielsweise Ausüben hoher Kräfte in einer Richtung, die durch einen "virtuellen Führungsmechanismus" gesperrt wird, können Schäden am Robotersystem entstehen.

In den heutigen Fertigungsanlagen stehen häufig eine Vielzahl von Robotern dicht gedrängt nebeneinander. Jeder dieser Roboter besitzt ein eigenes Programmierhandgerät (PHG). Eine eindeutige Zuordnung zwischen PHG und Roboter ist prinzipiell über ein gegebenenfalls vorhandenes Verbindungskabel zwischen beiden gegeben. In dieser Situation ist das Nachverfolgen des einen speziellen PHG mit dem zugeordneten Roboterverbindungskabel während der Inbetriebnahme und Programmierung eines Robotersystems, aber auch gegebenenfalls beim späteren Betrieb, mühsam und zeitaufwendig, so dass in der Praxis eher auf eine "Trial und Error" Methode zurückgegriffen wird, indem ein PHG vorsichtig bedient und geprüft wird, ob sich tatsächlich auch der gewünschten Roboter bewegt, und wenn nicht, ein anderes PHG ausprobiert wird. Entsprechendes gilt, wenn kein Kabel vorhanden ist, sondern die Kommunikation zwischen PHG und Robotersteuerung drahtlos erfolgt.

Der Erfindung liegt die Aufgabe zugrunde, ein Verfahren und eine Vorrichtung zu schaffen, mittels derer die Bedienung eines oder mehrerer Roboter zum Einrichten, Programmieren, Lehren von durch diesen durchzuführenden Bewegungsabläufen etc. vereinfacht und erleichtert wird.

Erfindungsgemäß wird die genannte Aufgabe gelöst durch ein Verfahren zum Einblenden rechnergenerierter Informationen in ein von einem Bildempfangsgerät erfasstes Bild der realen Umwelt auf einem Sichtgerät, wobei eine Bestimmung von Ort und Ausrichtung des Bildempfangsgeräts erfolgt und dieser Bestimmung entsprechende roboterspezifische Informationen auf dem Sichtgerät über das Bild der realen Umwelt auf dem Sichtgerät überblendet werden, und wobei als roboterspezifische Informationen virtuelle oder augmentierte roboterspezifische Raumobjekte auf dem Sichtgerät angezeigt und über das Bild der realen Umwelt überblendet werden und durch Manipulieren dieser virtuellen oder augmentierten roboterspezifischen Raumobjekte mittels eines Bedienelements eines Programmierhandgeräts eines Roboters dessen roboterspezifische Daten manipuliert werden.

Weiter sieht die Erfindung zur Lösung der Aufgabe eine Vorrichtung zum visuellen Einblenden computergenerierter Informationen in ein Bild der realen Umwelt vor, bei denen eine Einrichtung zur Bestimmung von Ort und Ausrichtung (Pose) des Bildempfangsgeräts und durch eine Einrichtung zum Überblenden der Bestimmung entsprechender roboterspezifischer Informationen über das Bild der realen Umwelt auf dem Sichtgerät vorgesehen ist.

Im Rahmen der Erfindung beinhaltet der Begriff roboterspezifische Informationen das Arbeiten eines Roboters betref-fender Informationen, wie insbesondere Informationen zu seinen Betriebs- und Programmdaten, die erfassenen Daten zum Roboter selbst, zu vom Roboter zu handhabenden Werkstücken sowie zu in seinem Bereich befindlicher Hindernisse, wie Anlagen, Teilen, diese jeweils zum Ort und Ausrichtung (Pose) sowie Bewegung. Die Informationen werden bildhaft auf dem Sichtgerät eingeblendet.

Durch die Erfindung wird eine höhere Flexibilisierung der Automatisierung von Arbeitsabläufen mittels Robotern erreicht, da ein Um- und Neuprogrammieren erleichtert wird.

Durch die Erfindung lässt sich Inbetriebnahme, Programmierung und Bedienung von Robotern vereinfachen und effizienter gestalten. Die Erfindung bezieht sich insbesondere auch auf Gruppen von Robotern und zusätzliche Komponenten einer Roboter aufweisenden komplexen Anlage, wie fördertechnischen Einrichtungen.

In einer ersten bevorzugten Ausgestaltung sieht die Erfindung vor, dass zumindest ein roboterspezifisches Bezugs-Koordinatensystem eingeblendet wird, wobei insbesondere Handflansch-festes Koordinatensystem eingeblendet wird. Die Visualisierung des Koordinatensystems des Flansches der Roboterhand und damit auch des damit an dieser befestigten Werkzeugs geschieht vorzugsweise derart, dass der Ursprung dieses Koordinatensystems vorzugsweise am Tool-Center-Point (TCP) wiedergegeben wird (TCP-Koordinaten-System). Danben können auch andere Bezugs-Koordinatensysteme, wie insbesondere das stationäre "Welt-Koordinatensystem" oder stationäre werkstück-feste (Basis-)Koordinatensysteme visualisiert werden, letzteres dann vorzugsweise im Symmetriemittelpunkt des stationären Sockels eines Roboters.

Bei stationären Basis-Koordinatensystemen (Welt, Basis) kann je nach Erfordernis zusätzlich oder alternativ ein in den TCP verschobenes Koordinatensystem eingeblendet werden, dessen Raumrichtungen dem des stationären Bezugs-Koordinatensystems entsprechen, das sich aber mit dem Flansch des Roboter mitbewegt.

In weiterer bevorzugter Ausgestaltung ist vorgesehen, dass Roboterachsen eingeblendet werden. Die virtuellen Roboterachsen werden dabei so mit dem realen Bild des Roboters überlagert, dass sie den Achsen der einzelnen Teile des Roboters (Sockel, Schwinge, Roboterarm und Roboterhand) entsprechen bzw. mit diesen zusammenfallen und diese so repräsentieren.

Die Koordinatenrichtungen werden am Robotersystem, z.B. an dessen Tool-Center-Point, eingeblendet und gegebenenfalls bezeichnet (z.B. "X", "Y", "Z" beim kartesischen Verfahren; beim achsspezifischen Verfahren z.B. "Achse 1", Achse 2", "Achse 3" usw.). Sinnvoll kann es auch sein, die aktive(n) Koordinatenrichtung(en) bzw. Achse(n) graphisch, z.B. durch Farbe oder Animation, hervorzuheben.

Zur Ermöglichung einer direkten Manipulation von Bezugskoordinatensystemen wird ein Koordinatensystem (des gewählten Typs) automatisch an einem vorgegebenen Ort generiert und visualisiert. Das Koordinatensystem kann dann durch den Nutzer unter visueller Kontrolle verschoben und gedreht werden, bis die gewünschte Position und Orientierung erreicht ist.

Das erfindungsgemäße Visualisieren des angewählten Bezugskoordinatensystems bzw. der Roboterachsen am realen Robotersystem über "Augmented Reality" (AR) macht das manuelle Verfahren, insbesondere mittels der Verfahrtasten des Robotersystems wird auf den Nutzer besser vorhersehbar.

Die durch die Erfindung ermöglichten Manipulierbarkeit der Bezugskoordinatensysteme enthebt den Nutzer davon, umständliche und aufwendige Vermessungsverfahren zu erlernen und durchzuführen. Ein Manipulieren von augmenten (virtuellen) Objekten ist intuitiver, spart Zeit und Kosten, und ermöglicht niedrigere Anforderungen an Qualifikation eines Nutzers.

Eine andere bevorzugte Ausgestaltung der Erfindung zeichnet sich dadurch aus, dass das Bild eines zumindestens in zwei Dimensionen bewegbaren Bedienungselements eines Roboter-Programmierhandgerätes eingeblendet wird, wobei insbesondere das Bild des Bedienungselements in Zuordnung und Ausrichtung des Roboter-Handflansches eingeblendet wird. Hierdurch wird dem Benutzer veranschaulicht und die Vorstellung erleichtert, welche Bewegung der Roboter und insbesondere dessen Roboterhand - sowie ein hieran befestigtes Werkzeug - ausführen, wenn das - reale - Bedienungselement beispielsweise an einem Programmierhandgerät betätigt wird. Das Bedienungselement kann entweder am TCP des Robotersystems eingeblendet werden und sich mit diesem bewegen. Alternativ kann das Eingabeelement auch an einem vorgegebenen Ort auf dem Display eingeblendet werden, oder aber ortsfest im Raum stehend.

Bei Bedienelementen, die einen symmetrischen Aufbau aufweisen, kann die Lage des Koordinatensystems im eingeblendeten Eingabeelement für den Nutzer gegebenenfalls nicht unmittelbar erkennbar sein. In diesem Fall kann es sinnvoll sein, zusätzliche Markierungen (z.B. ein graphisches Symbol) am eingeblendeten Eingabeelement anzubringen. In diesem Sinn kann z.B. auch die normale Position der Hand des Nutzers am Bedienungselement eingeblendet werden. Bei einem Bedienungselement mit sechs Freiheitsgraden (z.B. einer 6D-Maus) kann es auch ausreichen, nur die Hand des Nutzers ohne das Bedienungselement selbst einzublenden.

Neben der Visualisierung virtueller Elemente, wie Koordinatensystemen oder Roboterachsen oder auch realer Elemente in virtueller Form, wie einer Bedienungseinheit an einem Programmierhandgerät, zusammen mit dem Bild des realen Roboters kann in äußerst bevorzugter Ausgestaltung auch ein Roboter und sein Bewegungsablauf in einer realen Umgebung und mit dort vorhandenen realen Werkstücken visualisiert werden. Hierdurch verringert sich das Risiko von Personenoder Sachschäden. Der Zeitaufwand sinkt, da sich der augmentierte Roboter beliebig schnell bewegen darf, auch wenn sich Personen in unmittelbarer Umgebung befinden.

Für das Teachen von Bahnpunkten wird der simulierte Roboter vom Nutzer verfahren und die Bahnpunkte nach Erreich der gewünschten Zielposition abgespeichert. Beim Test von Programmen fährt der simulierte Roboter an der Stelle des realen Systems die programmierte Bahn ab. Dies kann in der programmierten oder auch jeder beliebigen anderen Geschwindigkeit erfolgen. Das Abfahren der Bahn muss nicht realitätsnah simuliert werden: So kann es vorteilhaft sein, lediglich nacheinander die Zielposen einzublenden (d.h. von Bahnpunkt zu Bahnpunkt zu springen), um diese zu überprüfen und gegebenenfalls anzupassen.

In weiterer bevorzugter Ausgestaltung kann erfindungsgemäß vorgesehen sein, dass eine bei einem Roboter im Rahmen eines Arbeitsvorgangs zu durchlaufende Roboterbahn, insbesondere die des Tool-Center-Points, gegebenenfalls mit Zusatzinformationen eingeblendet wird, vorzugsweise in Zuordnung zum Roboter, genauer dem Bild seines (realen) Handflansches bzw. des TCP eines Werkzeugs. Durch Programmieroder Manipulationsvorgänge, die ein Bediener an einem Programmierhandgerät ausführt, wird dann die Darstellung der visualisierten Roboterbahn, die ebenfalls in Zuordnung zum Roboter dargestellt wird, also durch den Handflansch bzw. dem TCP eines Werkzeugs hindurchläuft, im Raum verändert. Dies kann insbesondere dadurch geschehen, dass Bahnpunkte eingeblendet werden, dass die Position der Bahnpunkte im Raum veränderbar ist und jeweils eine der Position der Gesamtheit der Bahnpunkte entsprechende Roboter-Bahnkurve eingeblendet wird.

Auch können neben dem räumlichen Bahnverlauf auch zusätzliche Bewegungsparameter (z.B. Geschwindigkeiten, Beschleunigungen, o.ä.) oder spezielle Funktionen (z.B. Bahnschaltfunktionen, Setzen/Lesen von Eingängen/Ausgängen, Start/Stop von Bearbeitungsvorgängen, o.ä.) visualisiert werden. Diese Informationen können textuell, aber auch graphisch oder durch Animation visualisiert werden.

In weiterer Ausgestaltung kann vorgesehen sein, dass zur Anpassung einer Roboterbahn an die Position eines erfassten realen Werkstücks ein virtuelles Bild des Werkstücks mit einer an dieses angepassten Roboterbahn eingeblendet wird, so dass durch Überlagerung des virtuellen Werkstückbildes und der Bahnpunkte des Roboters mit dem Bild des realen Werkstückes die durchzuführende Roboterbahn an die Position des realen Werkstücks anpassbar ist.

Andere bevorzugte Ausgestaltungen der Erfindung sehen vor, dass der durch einen Roboter erreichbare Gesamtarbeitsraum und/oder zulässige Arbeitsbereiche und/oder unzulässige Arbeitsbereiche auf der Anzeige visualisiert wird und/oder Bewegungskorridore eines Roboter-Werkzeugs, einer Roboter-Hand und/oder weiterer Roboterelemente auf der Anzeige visualisiert werden. "Gesamtheitsraum" bezeichnet dabei die Gesamtmenge aller Posen, die der TCP einnehmen kann. "Arbeitsbereiche" können willkürlich vom Programmierer festgelegt werden.

Bei einer Vielzahl von Robotern, die beispielsweise bei einer Anlage zusammenwirken, kann weiterhin vorgesehen sein, dass permanente und/oder momentane Zuordnungen mindestens eines Programmierhandgerätes zumindestens eines Roboters visualisiert werden.

In ähnlicher Weise wie die Zuordnung zwischen Robotersystem und PHG lässt sich auch der aktuelle Stand des Robotersystems über AR visualisieren und gegebenenfalls ändern. Beispiele für zu visualisierende Zustände ist die gewählte Betriebsart, der Zustand der Antriebe (eingeschaltet bzw. stromlos), etc.

Allen beschriebenen bevorzugten Ausgestaltungen ist gemeinsam, dass die computergenerierten Informationen entweder dem Nutzer konstant oder auf dessen Anforderung hin visualisiert werden können (z.B. im Zusammenhang mit dem manuellen Verfahren bei der Betätigung einer Verfahrtaste, wenn die Zustimmungstaste nicht gedrückt ist). Eine weitere Alternative besteht darin, die Information zu einem vorgegebenen Zeitpunkt automatisch einzublenden (z.B. kurz bevor sich das reale Robotersystem in Bewegung setzt).

In den oben dargestellten vier Anwendungsbereichen kann das AR-System eine kontinuierliche Bildfolge liefern oder auch, vom Bediener ausgelöst, einzelne "Schnappschüsse". Die Information wird entsprechend entweder online in die Bildfolge oder offline in das aufgenommene Einzelbild eingeblendet.

Das Visualisieren kann auch ausschaltbar sein. Bei einer kontinuierlichen Bildfolge gegebenenfalls kann auch die Möglichkeit angeboten werden, das Bild einzufrieren.

Die Visualisierung von generierten Objekten kann beliebige Grade der Realitätsnähe aufweisen. Die Visualisierung kann auch halbtransparent oder als Kantenmodell ausgeführt werden, um die Sicht des Nutzers auf die Anlage nicht zu beeinträchtigen.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigt bzw. zeigen:
- Fig. 1a, 1b: eine erste Ausführungsform einer Vorrichtung zum Einblenden computergenerierter Informationen in ein Bild der realen Umwelt, in Draufsicht (Fig. 1a) und in Seitenansicht (Fig. 1b);
- Fig. 2a, 2b: eine andere Ausführungsform der erfindungsgemäßen Vorrichtung, in Draufsicht (Fig. 2a) und in Seitenansicht (Fig. 2b);
- Fig. 3: eine weitere Ausführungsform der erfindungsgemäßen Vorrichtung;
- Fig. 4a-4c: Darstellungen zur erfindungsgemäß ermöglichten Manipulation von augmentischen Raumobjekten in verschiedenen Varianten;
- Fig. 5: beispielhaft ein Ablaufdiagramm zum AR-unterstützten Ändern einer Roboterbahn;
- Fig. 6: ein Blockschaltbild der erfindungsgemäßen Vorrichtung;
- Fig. 6a: ein Blockschaltbild der erfindungsgemäßen Vorrichtung entsprechend der Ausführungsform der Fig. 2;
- Fig. 6b: ein Blockschaltbild der erfindungsgemäßen Vorrichtung entsprechend einer Ausführungsform der Fig. 3;
- Fig. 7a-c: Darstellungen von ausgewählbar koordinierten Systemen und Verfahrindikator (Fig. 7a) zum manuellen kartesischen Verfahren.
- Fig. 8-17: erfindungsgemäß erzeugbare kombinierte Darstellungen von Bereichen der realen Umwelt zusammen mit roboterspezifischen computer-generierten Informationen als erweiterte Realitäts-Darstellungen (Augmented Reality Displays).

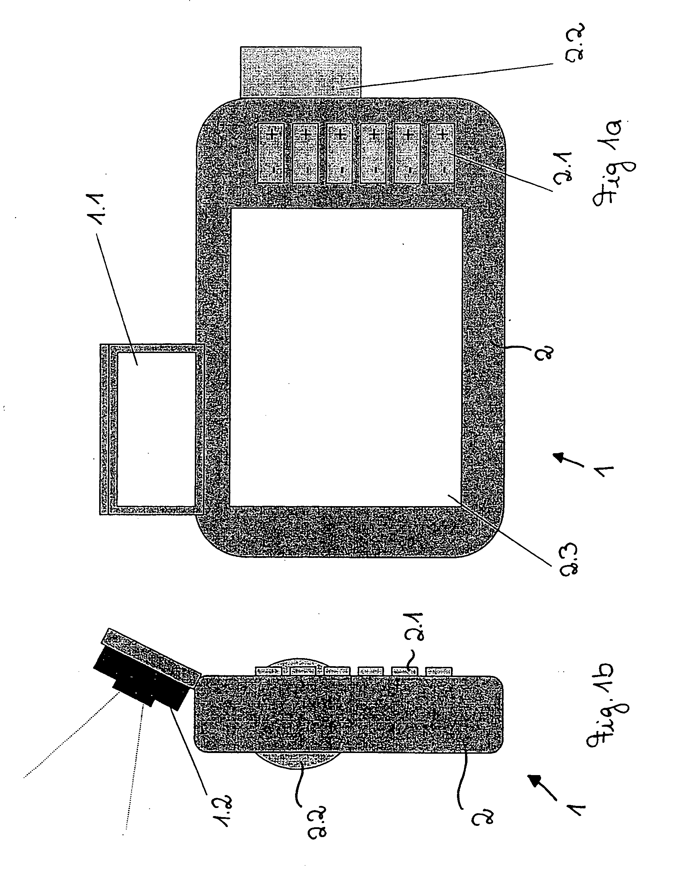

Die Figuren 1a und 1b zeigen eine erste Ausführungsform einer erfindungsgemäßen Vorrichtung 1 zum Einblenden rechnergenerierter Informationen in ein Bild der realen Umwelt auf einer Anzeige.

Die erfindungsgemäße Vorrichtung 1 weist ein Programmierhandgerät 2 (PHG) für einen Roboter auf, mit dem der Arbeitsablauf eines Roboters in komfortabler Weise programmiert werden kann. Das Programmierhandgerät 2 weist hierzu Bedienungselemente in Form von - im dargestellten Ausführungsbeispiel - sechs Verfahrtasten 2.1 sowie einer sogenannten 6D-Maus 2.2 auf, über die die Bewegungen der sechs Achsen eines Roboters genauso wie über die Verfahrtasten 2.1 gesteuert werden kann. Ein solches Programmierhandgerät 2 ist aus der EP 0 840 910 (entsprechend US 6,134,102) bzw. aus der EP 0 840 909 (entsprechend US 6,362,813) bekannt, auf die ausdrücklich zur Offenbarung eines solchen Programmierhandgeräts verwiesen wird. Das Programmierhandgerät 2 weist weiterhin einen Bildschirm 2.3 auf, auf dem Informationen und Daten des Steuerprogramms, wie verschiedene Parameter zum Bewegungsablauf der Roboterbewegung, dargestellt werden. Eingaben können beispielsweise über - nicht dargestellte - körperliche Tasten erfolgen oder aber, indem der Bildschirm 2.3 als berührungsempfindlicher Bildschirm (Touch-Screen) ausgebildet ist und Eingabetasten auf dem Bildschirm 2.3 eingeblendet werden.

Im dargestellten Ausführungsbeispiel der Fig. 1a und 1b weist die erfindungsgemäße Vorrichtung eine weiteres, vom Bildschirm 2.3 getrenntes zusätzliches Sichtgerät 1.1 auf, das allerdings körperlich mit dem Programmierhandgerät 2 verbunden ist und beispielsweise an diesem schwenkbar angebracht ist. Auf der Rückseite des Sichtgeräts 1.1 ist im dargestellten Ausführungsbeispiel ein Bildempfangsgerät A.2 in Form einer Kamera vorgesehen, mittels derer die reale Umwelt aufgenommen werden kann, wobei aufgrund dieser Aufnahme, beispielsweise durch im Raum angeordnete Markierungen, der Ort und die Ausrichtung des Bildempfangsgeräts 1.2, kurz als Pose bezeichnet, im Raum rechnerisch bestimmt werden können. Alternativ kann die Pose des Bildempfangsgeräts 1.2 auch durch einen Vergleich des von ihm aufgenommenen tatsächlichen Bildes mit einem gespeicherten Referenzbild oder durch ein zusätzliches Sensorsystem erfolgen.

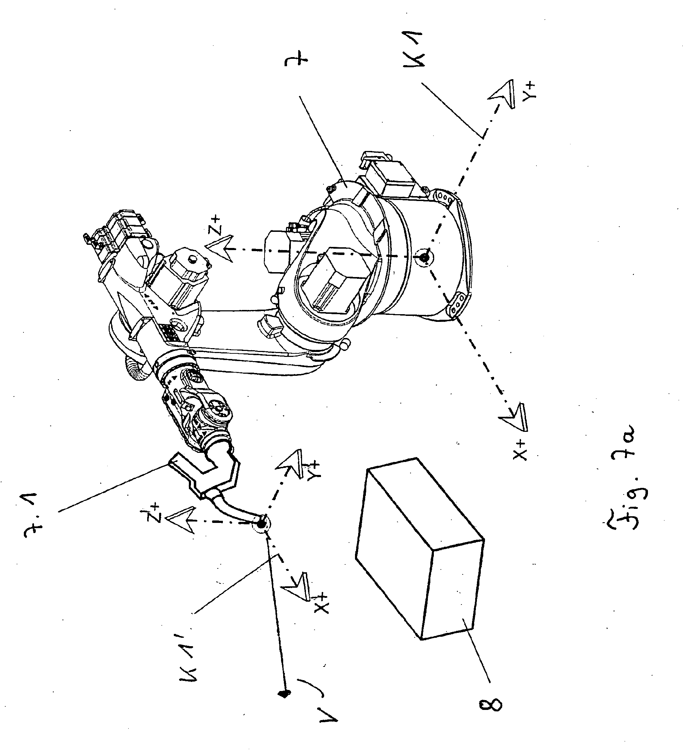

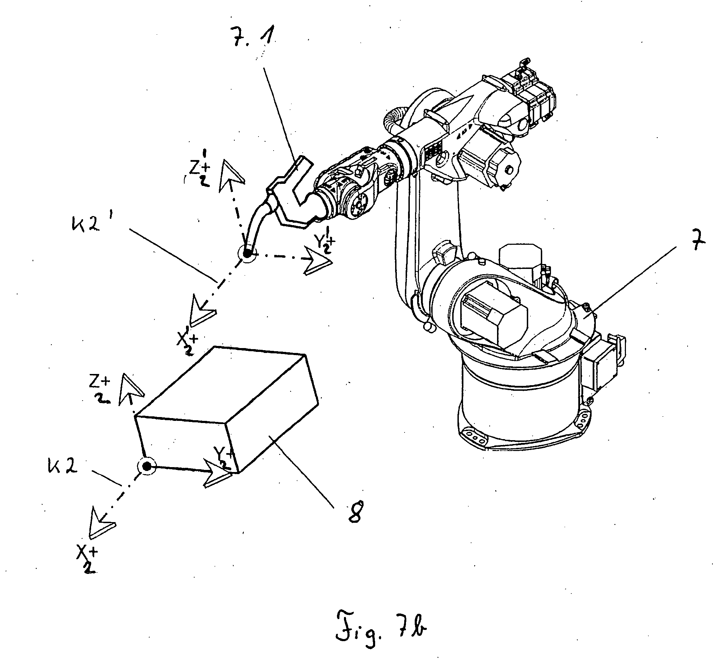

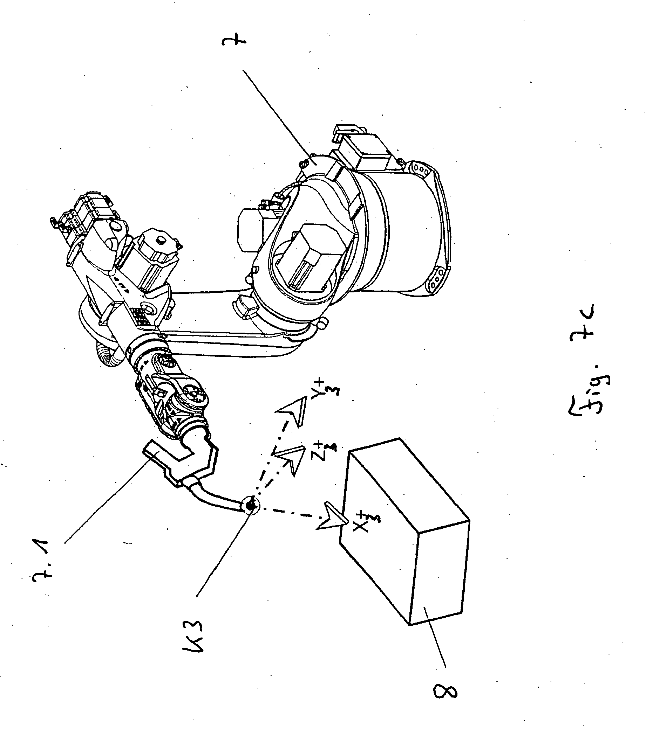

Auf dem Sichtgerät 1.1 wird einerseits das von der Kamera 1.2 aufgenommene Bild der realen Umwelt dargestellt, andererseits werden roboterspezifische computergenerierte Informationen in dieses Bild miteingeblendet, wie dies beispielhaft in Darstellungen auf dem Sichtgerät 1.1 gemäß den Figuren 7 bis 18 dargestellt ist.

Statt eines Sichtgeräts 1.1 in Form eines herkömmlichen graphikfähigen Bildschirms kann das Sichtgerät 1.1 auch ein transparenter Bildschirm sein, so dass, gegebenenfalls über eine Abbildungsoptik auf dem Sichtgerät 1.1 ein Bild der realen Umwelt ohne opto-elektronische Wandlung dargestellt werden kann und sichtbar ist. Die Bestimmungen der Pose kann in einem solchen Falle beispielsweise auch technisch erfolgen, indem im Raum Funkmarkierungen angeordnet sind, relativ zu denen die Position und Ausrichtung mittels eines zumindestens mit dem Sichtgerät 1.1 verbunden Empfängers bestimmt werden kann.

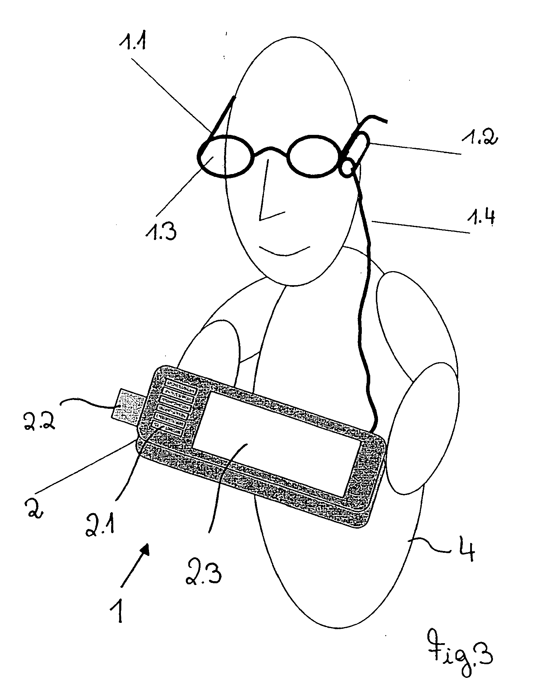

Grundsätzlich kann das Sichtgerät 1.1 auch räumlich getrennt vom Programmierhandgerät 2 vorgesehen sein - wie es in einer speziellen Ausbildung der Ausgestaltung der Fig. 3 der Fall ist.

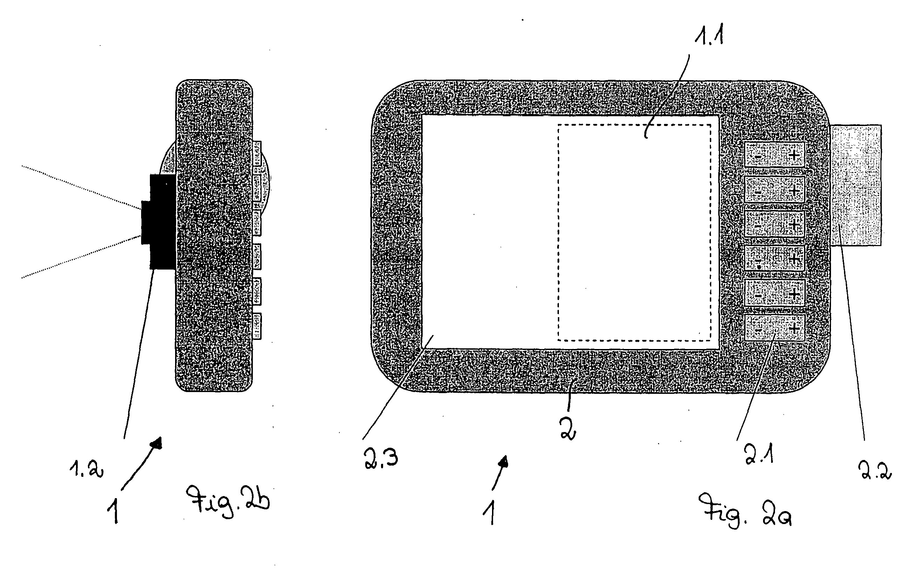

Statt eines separaten Bildschirms als Sichtgerät 1.1, wie es bei der Ausgestaltung der Fig. 1a, 1b der Fall ist, kann das ein Bild der realen Umwelt zusammen mit roboterspezifischen computergenerierten Informationen darstellende Sichtgerät 1.1 auch im Programmierhandgerät 2 integriert sein, beispielsweise als Bildschirmfenster innerhalb der Bildschirmanzeige 2.3 des Programmierhandgeräts 2, wie dies in der Ausgestaltung der Fig. 2a, 2b der Fall ist.

In einem solchen Fall wird eine Kamera 1.2 zur Aufnahme des Bildes der realen Umwelt unmittelbar am Programmierhandgerät 2 angeordnet, wie dies insbesondere aus der Fig. 2b ersichtlich ist. Sie kann auch völlig getrennt vom Sichtgerät 1.1 angeordnet sein, insbesondere wenn beispielsweise ein sinnvoller Aufnahmeort für den Bediener nicht oder schlecht zugänglich ist.

Ansonsten entspricht die Ausgestaltung der Fig. 2a, 2b, insbesondere hinsichtlich des Programmierhandgeräts 2 der Ausgestaltung der Fig. 1a, 1b.

Die Fig. 3 zeigt die Ausgestaltung einer erfindungsgemäßen Vorrichtung mit einem Sichtgerät 1.1 in Form einer Brille, bei deren Brillengläser 1.3 die reale Umwelt direkt von einem Nutzer 4 wahrgenommen werden kann ("See-through" Brille), wobei die Gläser 1.3 als transparenter Bildschirm ausgebildet sind, in die roboterspezifische computergenerierte Informationen eingeblendet werden können. Hierzu ist das Sichtgerät 1.1 über ein Kabel 1.4 mit einem Programmierhandgerät 2 verbunden. Dieses kann auch durch eine drahtlose Übertragung, insbesondere eine Funkübertragung, aber auch eine Infrarot-Übertragung ersetzt sein. An dem Sichtgerät 1.1 ist eine Kamera 1.2 vorgesehen, mit der über entsprechende optische Markierungen im Raum Ort und Ausrichtung des Sichtgeräts 1.1 bestimmt werden können. Zusätzlich oder alternativ kann die Pose des Sichtgeräts 1.1 bzw. des Bildempfangsgeräts 1.2 aus einem Vergleich des Kamerabilds mit gespeicherten Bildes erfolgen. Grundsätzlich kann auch hier ein elektromagnetisches, optisches oder akustisches Sensorsystem vorgesehen sein, mittels dessen Ort und Ausrichtung des Bildempfangsgeräts bzw. Sichtgeräts relativ zu entsprechenden Markierungssendern im Raum bestimmt werden können, wie dies oben erläutert wurde.

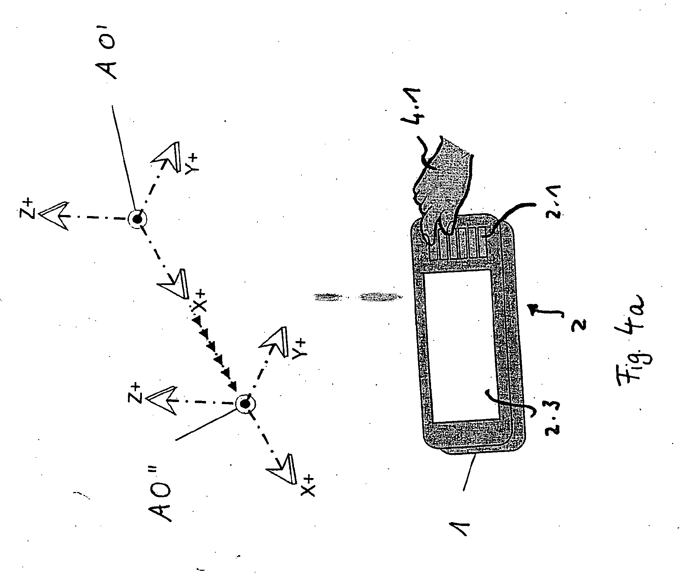

Durch die Erfindung wird ein Manipulieren roboterspezifischer Daten durch Manipulieren virtueller oder augmentierterr roboterspezifischer (Raum-)Objekte, wie Roboter selbst, Bahnverlauf, Werkstücke etc, ermöglicht. Dies wird unter Bezug auf die Fig. 4a bis 4e erläutert.

Die bekannten Bedienelemente am Programmierhandgerät, wie Verfahrtasten 6D-Maus können mittels Betätigung durch die Hand 4.1 eines Roboters dazu eingesetzt werden, die angewählten augmentierten Raumobjekte zu verschieben und verdrehen, wobei AR' die Pose des verschobenen Raumobjekts angibt, ganz ähnlich wie der TCP eines realen Robotersystems im Rahm verfahren wird. Der Zeitaufwand ist gegenüber einer reinen AR-Visualisierung gering.

Die Lage eines Eingabeelements im Raum kann durch ein Sensorsystem 3 mit einem stationären Empfangssystem 3.1 und einem Eingabeelement 3.2, beispielsweise in Form eines Zeigestifts erfasst. Bewegt ein Nutzer ein Eingabeelement 3.2, so wird diese Bewegung auf das angewählte aumentierte Raumobjekt AR (oder gg. auch mehrere) übertragen.

Um die Ergonomie zu erhöhen, kann die Bewegung entsprechend eines durch den Nutzer vorgegebenen Skalierungsfaktors verkleinert oder vergrößert auf das ausgewählte Raumobjekt übertragen werden. Die Herstellung der "Kopplung" der räumlichen Bewegungen von Eingabeelementen und augmentiertem Raumobjekt erfolgt auf eine entsprechende Eingabe des Nutzers hin (z.B. so lange dieser einen Knopf am Eingabeelement gedrückt hält). Über wechselndes "Koppeln" und "Entkoppeln" lassen sich augmentierte Raumobjekte auch über große Distanzen verschieben, ohne das Eingabeelement über eine entsprechend große Distanz bewegt werden muss, soö dass eine "Indesierung" erfolgt.

Eingabeelemente im oben beschriebenen Sinn sind z.B. ein Zeigestift, ein Handgriff, ein Datenhandschuh, oder auch das Programmierhandgerät selbst. Bei dem Sensorsystem kann es sich z.B. um ein auf elektromagnetischer (z.B. Funk), optischer (z.B. Infrarot) oder akustischer (z.B. Ultraschall) Ortung basierendes System handeln. Wird das Programmierhandgerät selbst als Eingabeelement verwendet, so kann das oben erwähnte, in diesem ggf. ohnehin enthaltene System zur Bestimmung der räumlichen Pose auch für die Manipulation von Raumobjekten genutzt werden.

Alternativ kann die Pose des Eingabeelements (z.B. eines Zeigestifts) nicht gegenüber dem Erdboden, sondern gegenüber dem handgehaltenen Programmierhandgerät gemessen und ausgewertet werden. Neben den oben beschriebenen Möglichkeiten kann die Pose des Eingabeelements dann auch durch ein mechanisches Messsystem zwischen Eingabeelement und Programmierhandgerät zum Einsatz kommen, wie eine Mehrgelenk-Kinematik mit integrierten Gelenkwinkelsensoren.

Mit einem Eingabeelement 3.1 (z.B. einem Zeigestift, einem Handgriff, einem Datenhandschuh oder dem gesamten Programmierhandgerät), dessen Pose im Raum durch ein entsprechendes System erfasst wird, können Raumobjekte AO direkt vorgegeben werden.

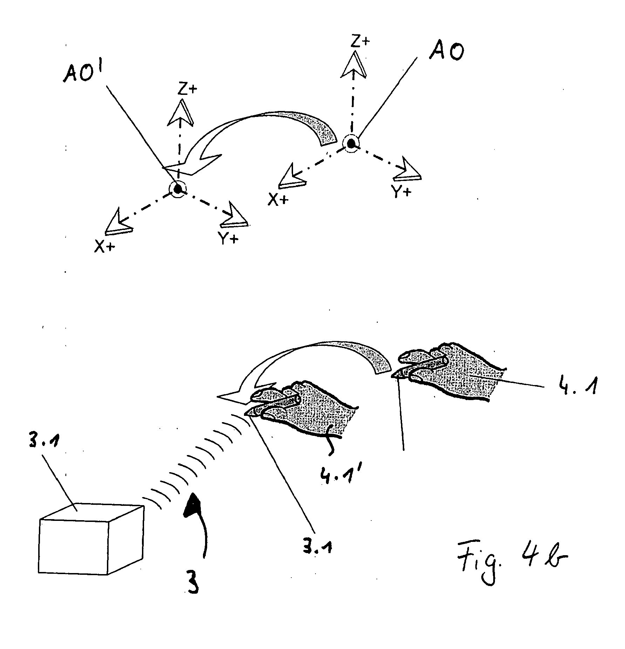

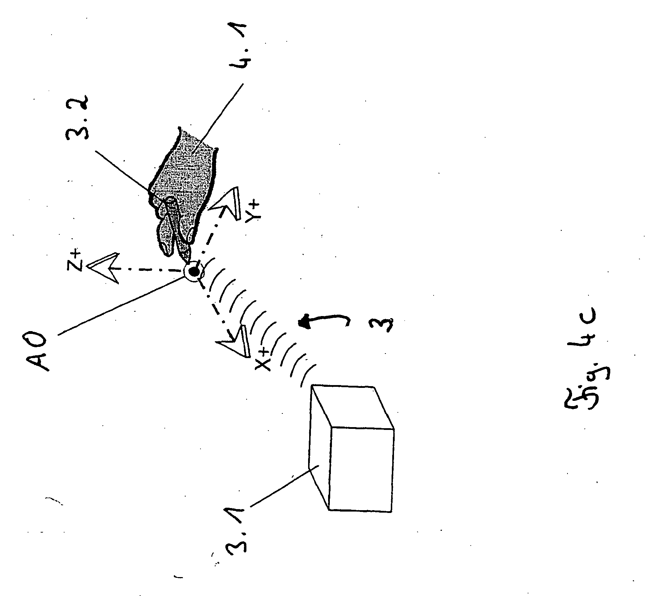

Der wesentliche Vorteil der Manipulationsmöglichkeiten gemäß den Fig. 4b und 4c ist, dass die Manipulation von Raumobjekten über das räumliche Positionieren eines Eingabeelements zeitsparender und für den Nutzer intuitiver ist als über ein geschwindigkeitsgesteuertes Verschieben und Verdrehen z.B. mittels Verfahrtasten oder 6D-Maus.

Die beschriebenen Manipulationsmöglichkeiten lassen sich auf jedes der beschriebenen AR-Einsatzszenarien (Verschieben des Bezugskoordinatensystems bei der Vermessung von Werkzeug- oder Werkstückkoordinatensystemen, Verschieben der Stützpunkte von Roboterbahnen, Verschieben der Eckpunkte oder Seitenwände von Arbeitsbereichen, etc.) abbilden.

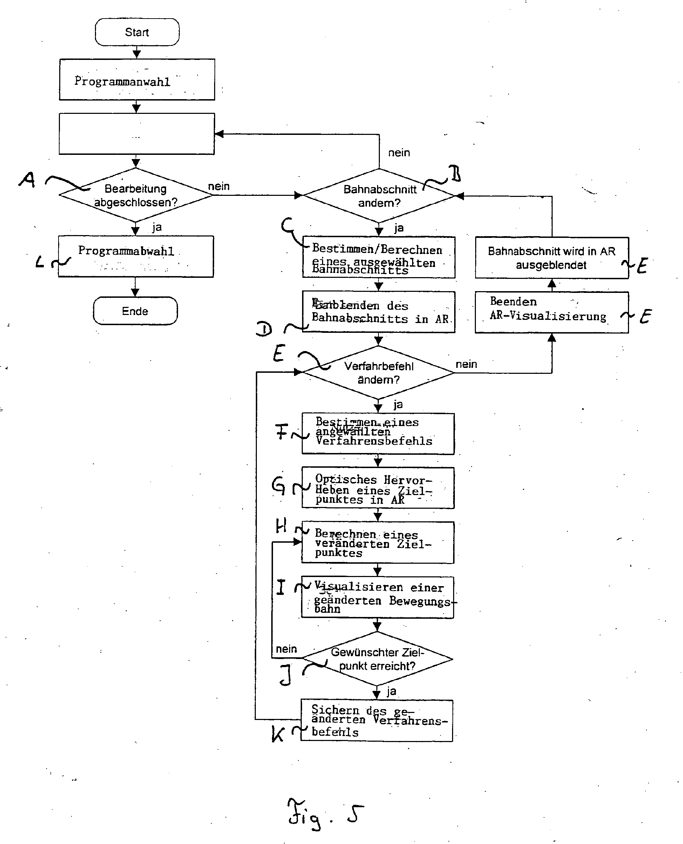

Der in Fig. 5 dargestellte Ablauf beim AR-gestützten Ändern einer Roboterbahn beinhaltet zunächst eine Nachprogrammanwahl eine Abfrage zum Status der Bearbeitung, dahingehend, ob diese abgeschlossen ist oder nicht (Schritt A). Im Falle einer Verneinung erfolgt eine Abfrage dahingehend, ob ein Bahnabschnitt geändert werden soll (Schritt B). Ist dies nicht der Fall, so erfolgt ein Rücksprung. Wenn ein Bahnabschnitt geändert werden soll, so erfolgt im Programm eine Bestimmung bzw. Berechnung hinsichtlich eines ausgewählten Bahnabschnittes, wobei dieser auch die gesamte Bahn des Tool-Center-Points beinhalten kann (Schritt C). Der ausgewählte Bahnabschnitt oder auch die gesamte Bahn werden auf dem Sichtgerät in ein Bild der realen Umgebung eingeblendet (Schritt D). Im folgenden erfolgt eine Abfrage dahingehend, ob ein Verfahrbefehl oder auch mehrere geändert werden sollen. Ist dies nicht der Fall, so wird die Visualisierung beendet (Schritt D') und der Bahnabschnitt ausgeblendet (Schritt D''), sowie ein Rücksprung zur Abfrage B vorgenommen.

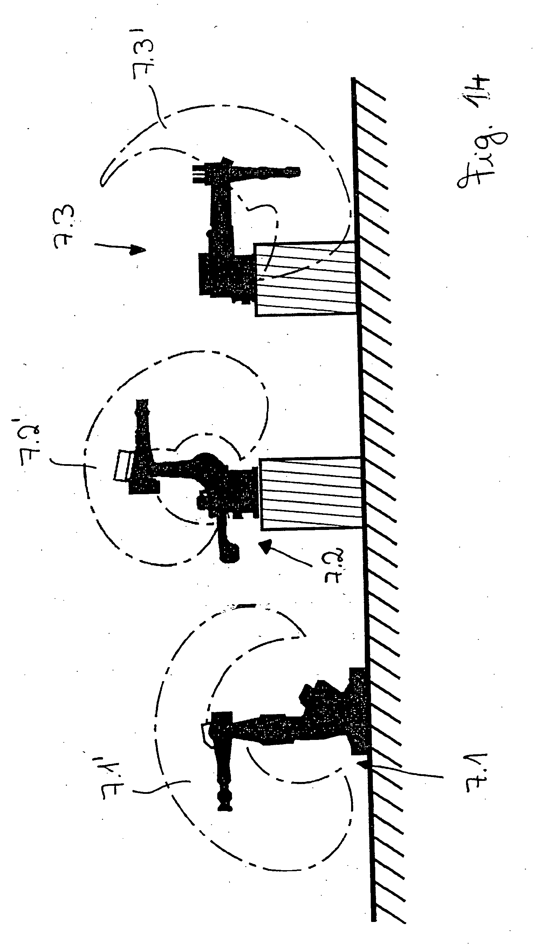

Bei Veränderung eines Verfahrbefehls oder auch mehrere wird ggf. die zugehörige Bahn bestimmt (Schritt F). Der Zielpunkt der ausgewählten Verfahrbewegung und ggf. auch die dazugehörige Bahn des Tool-Center-Points wird in der AR-Darstellung graphisch hervorgehoben (Schritt G). Gegebenenfalls wird hier auch die Orientierung in geeigneter Weise durch Einblenden eines Koordinatensystems visualisiert, wie dies weiter unten insbesondere unter Bezug auf die Fig. 14 erläutert ist.

Aufgrund von unter Bezug auf die Fig. 4a bis 4c beschriebenen Vorgaben seitens des Nutzers durch Verschieben der Bahn und ggf. des Zielpunktes im Raum werden nun veränderte Zielpunkte und ggf. Bahnen bestimmt (Schritt H) und in der AR-Darstellung visualisiert (Schritt I), so dass die Lage des Zielpunktes (und ggf. der Bahn) in der AR-Darstellung überprüft werden kann. Gegebenenfalls überprüft die Software der Robotersteuerung, ob der Zielpunkt durch den Roboter erreichbar ist und generiert ggf. Warnmeldungen.

Nach Berechnung und Darstellung gewünschter Zielpunkte (und ggf. Bahnen gemäß den Schritten H, I) erfolgt eine Abfrage dahingehend, ob der gewünschte Zielpunkt (und ggf. der gewünschte Bahnverlauf) erreicht ist (Schritt J). Ist dies nicht der Fall, so kann das Bestimmen und Visualisieren eines anderen Zielpunktes (und ggf. Bahnverlaufs) wiederholt werden, so dass die Schritte H, I wiederholt werden. Ist der gewünschte Zielpunkt erreicht, so erfolgt ein Sichern desselben und des zugehörigen Verfahrbefehls (Schritt K).

Anschließend erfolgt ein Rücksprung zur Abfrage E dahingehend, ob ggf. ein anderer Verfahrbefehl geändert werden soll. Ist dies der Fall, so werden für diesen die Schritt F bis K wiederum durchlaufen; ist dies nicht der Fall, so erfolgt, wie unter Bezug auf die Schritte E', E" erläutert ein Rücksprung zur Abfrage ob ein weiterer Bahnabschnitt verändert werden soll (Schritt B), wenn dies nicht der Fall ist, wie ebenfalls schon erläutert, ein Rücksprung zur Abfrage hinsichtlich des Bearbeitungsstatuses und, wenn keine weitere Bearbeitung erfolgen soll, eine Abwahl des Programms und damit dessen Beendigung (Schritt L).

Das Einfügen eines weiteren Zielpunktes einer Verfahrbewegung erfolgt entsprechend, wobei eine Ausgangsposition eingeben oder aber seitens des Programms automatisch vorgeschlagen werden kann, wobei in diese die Zielposition der vorhergehenden Fahrbewegung sein kann.

Der dargestellte Programmablauf kann weiterhin automatisiert und vereinfacht werden, indem beispielsweise Roboterbahnen unmittelbar nach Öffnen des Programms automatisch eingeblendet werden und/oder eine Auswahl von möglichen Roboterbahnen automatisch visualisiert wird. Der Nutzer kann ggf. entsprechende Roboterbahnen in einer Art Voransicht in der ogmentierten Realität betrachten, sobald ein Programm lediglich in einer Programmübersicht des Programmierhandgeräts markiert wurde.

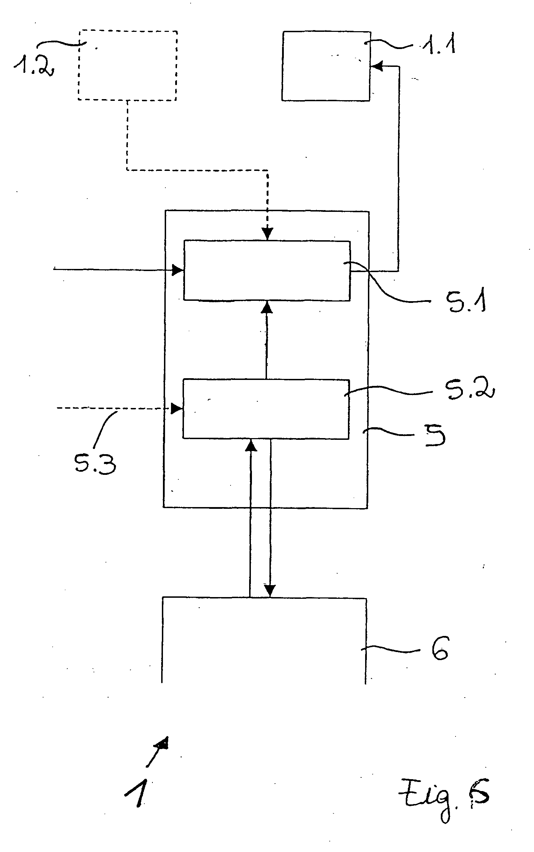

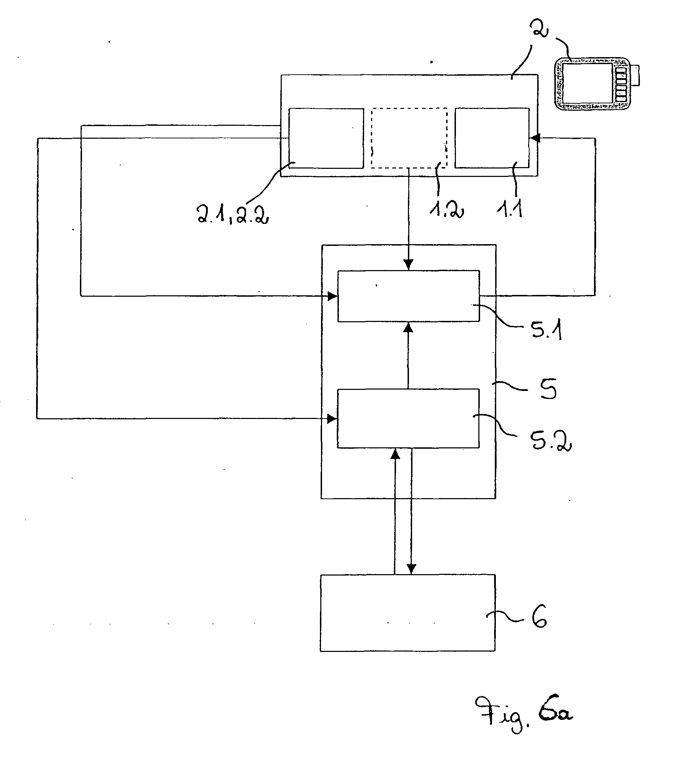

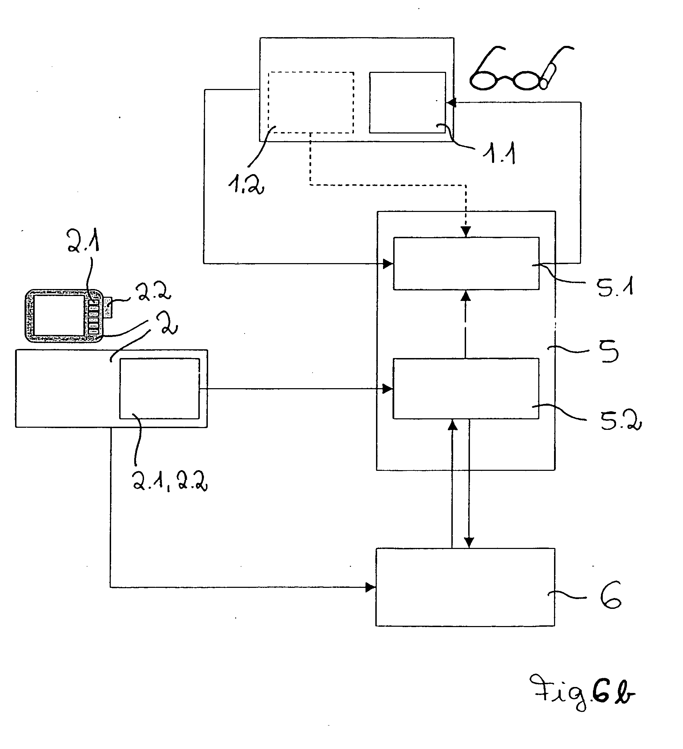

Die weiteren Figuren 6 bis 6b zeigen einen prinzipiellen schaltungstechnischen Aufbau der erfindungsgemäßen Vorrichtung zum Einblenden roboterspezifischer rechnergenerierter Informationen in ein Bild der realen Umwelt, wobei aus diesen Darstellungen auch der erfindungsgemäße Verfahrensablauf ersichtlich ist.

Die erfindungsgemäße Vorrichtung 1 weist eine Verarbeitungseinheit 5 zur Verarbeitung roboterspezifischer, computergenerierter Informationen, zwecks deren Darstellung auf dem Sichtgerät 1.1, auf. Mit der Verarbeitungseinheit 5 kann eine Kamera 1.2 verbunden sein - wie in Fig. 4 gestrichelt eingezeichnet -, die ein Bild der realen Umwelt aufnimmt und der Verarbeitungseinheit 5 zuführt. Innerhalb der Verarbeitungseinheit 5 befindet sich eine Bildgenerierungseinheit 5.1, von der Lage und Ausrichtung des Sichtgeräts 1.1 von der Kamera 1.2 ausgewertet werden, die zusammen mit dem Kamerabild darzustellenden roboterspezifischen, computergenerierten Informationen mit dem Kamerabild vermischt werden, so dass Realbild und darzustellende Informationen gemeinsam auf dem Sichtgerät 1.1 dargestellt werden.

Hierzu weist die Verarbeitungseinheit 5 eine Manipulationseinheit 5.2 auf, die Datenschnittstellen zur Steuerung zumindestens eines Roboters, Robotersteuerung 6, hat und von dieser roboterspezifische Informationen bezieht, die zusammen mit dem Bild der realen Umwelt auf dem Sichtgerät 1.1 dargestellt werden sollen. Weiterhin kann die Verarbeitungseinheit 5 eine Schnittstelle für Eingabegeräte, wie beispielsweise ein Programmierhandgerät für einen Roboter, beinhalten, die eine räumliche Manipulation der roboterspezifischen Informationen durch einen menschlichen Nutzer erlauben. Durch die erfindungsgemäße Vorrichtung werden roboterspezifische Informationen, gegebenenfalls unter Berücksichtigung von Nutzereingaben, in Modelle der erweiterten Realität (Augmented Reality Models) eingesetzt, die wiederum von der Bildgenerierungseinheit 5.1 zur Darstellung des erweiterten Bildes auf dem Sichtgerät 1.1 weiter verarbeitet werden. Verändernde Roboterdaten, gegebenenfalls aufgrund Nutzereingaben, können von der Modellmanipulationseinheit 5.2 an die Robotersteuerung 6 zurückgegeben werden. 5.3 bezeichnet einen Nutzereingang zum räumlichen Manipulieren der AR-Daten.

Die Verarbeitungseinheit 5 kann grundsätzlich entweder in das Sichtgerät 1.1, ein Programmierhandgerät 2 oder auch in die Robotersteuerung 6 integriert sein. Sie kann grundsätzlich auch eine eigene physikalische Einheit bilden. Die Verarbeitungseinheit 5 kann auch räumlich aufgeteilt sein, indem beispielsweise die Bildgenerierungseinheit 5.1 im Sichtgerät 1.1 oder einem Programmierhandgerät 2 angeordnet ist, während die Modellmanipulationseinheit 5.2 in der Robotersteuerung 6 untergebracht sein kann. Grundsätzlich kann die Verarbeitungseinheit 5 oder können Teile derselben für verschiedene Roboter auch in einem zentralen System zusammengefasst sein, wobei gegebenenfalls Kommunikationswege auch über das Internet führen können.

Bei der in Fig. 6 dargestellten Architekten handelt es sich um eine grundlegende, von der Fig. 6a und Fig. 6b Spezialfälle für handgehaltene bzw. brillenartige Sichtgeräte abgeleitet sind. Die allgemeine Architektur stellt die Gemeinsamkeiten zwischen den folgenden beiden speziellen Architekturen heraus.

Bei der Ausgestaltung der Fig. 6a ist das Sichtgerät 1.1 entsprechend den Darstellungen der Fig. 1a, 1b, 2a, 2b mit einem Programmierhandgerät 2 verbunden oder in diesem integriert. Dieses weist eine Kamera 1.2 sowie Eingabeelemente 2.1, 2.2 (Tasten, 6D-Maus) auf. Über die Kamera 1.2 kann die Lage derselben und damit des Sichtgeräts 1.1 in der beschriebenen Form erfasst werden, während über die Eingabeelemente 2.1, 2.2 Eingaben zur Manipulation von Roboterdaten durch den menschlichen Nutzer eingegeben werden können. Ansonsten entspricht die Ausgestaltung der Fig. 5 der der Fig. 4.

Fig. 6 zeigt das prinzipielle Blockschaltbild zur erfindungsgemäßen Vorrichtung gemäß der Ausgestaltung der Fig. 2. Das Sichtgerät 1.1 ist in einer Augmented-Reality-Brille integriert, die auch mit einer Kamera 1.2 versehen sein kann. Die Brille kann auch vom "See-through" Typ sein, bei der die reale Welt nicht über ein Kamerabild, sondern direkt wahrgenommen wird, und nur die computergenerierten Informationen eingeblendet werden. Neben einem räumlichen Eingabeelement, beispielsweise einem Programmierhandgerät 2 mit Eingabetasten 2.1 und/oder einer 6D-Maus 2.2, ist räumlich und körperlich getrennt ein Sichtgerät 1.1 vorgesehen.

Ansonsten entspricht auch das Blockschaltbild der Fig. 6 auch dem der Fig. 4.

Grundsätzlich kann das Eingabegerät in Form des Programmierhandgeräts 2, auch soweit es als Sichtgerät 1.1 mitwirkt, auch in anderer Ausgestaltung vorgesehen sein; beispielsweise kann ein anderes Eingabegerät und auch ein anderes Sichtgerät vorgesehen sein, wie insbesondere letzteres weiter oben beschrieben wurde.

Die Figuren 7a bis 7c zeigen mögliche Darstellungen auf dem Sichtgerät 1.1 mit Bereichen der realen Umwelt, wie insbesondere einen Roboter 7 selbst oder aber ein von diesem zu bearbeitendes Werkstück 8 sowie mit diesem Bild der realen Umwelt verbundene, in das Bild eingeblendete roboterspezifische computergenerierte Informationen. Mit dem Bild eines realen Roboters 7 mit einem Werkzeug 7.1, wie einer Schweißzange können diesem zuzuordnende Koordinatensysteme, wie das stationäre Weltkoordinatensystem K1 mit den Koordinaten X+, Y+, Z+ generiert werden. Bei dem Koordinatensystem K' handelt es sich um ein in den TCP parallelverschobenes Weltkoordinatensystem mit den verschobenen Koordinaten X'+, Y'+, Z'+. Der Ursprung des Weltkoordinatensystems K1 liegt am Schnittpunkt der Symmetrieachse des Sockels 7a des Roboters 7 mit dem Untergrund und der Ursprung des Koordinatensystems K2 ist in den Mittelpunkt des Handflansches oder aber, bei einem vorhandenen Werkzeug, in den Tool-Center-Point verlegt. Durch die Darstellung der Koordinatensysteme wird eine Unterstützung beim manuellen kartesischen Verfahren des Roboters-, insbesondere mittels der Verfahrtaste am Programmiergerät, geschaffen (Fig. 7a).

Der schwarze Pfeil V in Fig. 7a visualisiert durch seine Richtung und Länge die Bewegungsrichtung und Geschwindigkeit, mit der sich der Roboter bewegen würde, wenn er verfahrbereit wäre, solange er nicht verfahrbereit ist (Antriebe nicht eingeschaltet, Zustimmungstaste nicht gedrückt). Verfährt der Roboter, so visualisiert der Pfeil V die aktuelle Verfahrrichtung und -geschwindigkeit des Robotersystems.

Um die Erstellung, die Anpassung oder den Test von Roboterprogrammen zu erleichtern, kann das zu bearbeitende Werkstück 8 in Zuordnung zu dem Bild eines realen Roboters 7 computergeneriert visualisiert werden. Das simulierte Bauteil 8' bildet dann bei Erstellung, Anpassung und Test vom Roboterprogramm die Referenz. Die Verwendung eines simulierten Bauteils 8' kann auch vorteilhaft sein, wenn das reale Bauteil 8 sperrig ist oder die freie Bewegung des Nutzers 4 in der Anlage behindert (Fig. 7b).

Die Fig. 7c zeigt die Einblendung eines Werkzeug-Koordinatensystems K3 mit den Koordinaten X₃+, Y₃+, Z₃+ als AR-Unterstützung beim manuellen karterischen Verfahren.

Durch Manuipulation des Bezugskoordinatensystems kann ein Vermessen von Werkzeug oder Werkstück erfolgen. Der Ablauf ist ähnlich dem der Manipulation der Zielpunkte von Bahnbewegungen wie unter Bezug auf die Fig. 5 erläutert. Das Bezugskoordinatensystem wird unter Sichtkontrolle des Nutzers im Raum verschoben und verdreht, bis es sich in der gewünschten Position relativ zum Werkstück (bei der Vermessung eines Basis-Koordinatensystems) oder zum Werkzeug (bei der Vermessung eines Tool-Koordinatensystems) befindet.

Soll eine Roboterbahn programmiert oder geändert werden und steht kein reales Werkstück zur Verfügung, so kann erfindungsgemäß statt dessen mit einem augmentierten Werkstück gearbeitet werden. Ein Nutzer teacht die Punkte durch manuelles Verfahren des Roboters nicht am realen, sondern am augmetierten Werkstück. In gleicher Weise wie ein nicht vorhandenes Werkstück könnten auch nicht vorhandene Anlagenkomponenten augmentiert werden, um z.B. die Roboterbahn so festlegen zu können, dass nach Installation dieser Anlagenkomponenten keine Kollisionen erfolgen. Das manuelle Verfahren des Roboter in einem Raum, in dem (fast) nur augmentierte Objekte eingeblendet sind, ist einfacher, weil keine Rücksicht auf Kollisionen des Roboter mit realen Objekten genommen werden muss und sich der Nutzer ungehindert im Raum bewegen kann. Die augmentierten Objekte sind hier statischer Natur.

Ist kein reales Werkstück vorhanden, so kann die Visualisierung des Werkstücks mittels AR dem Nutzer eventuell wertvolle Zusatzinformation liefern, welche Verfahrbefehle des Roboter zu einem bestimmten Bearbeitungsvorgang gehören, (indem ggf. sehr komplexe Roboterbahnen visualisiert werden, so dass eine Übersicht schwierig ist).

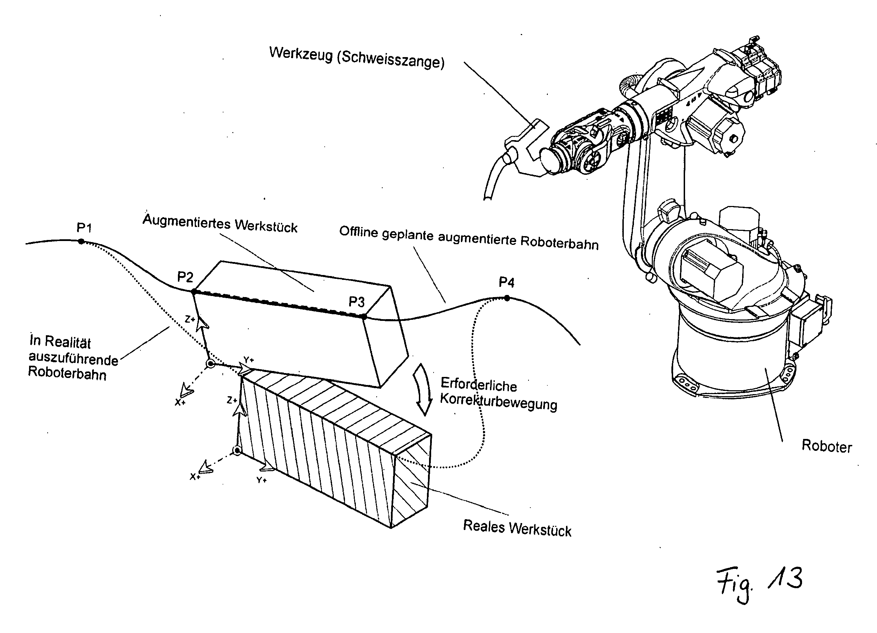

Die Visualisierung des augmentierten Werkstücks zeigt dem Nutzer an, von welchem Werkstück der Roboter ausgeht. Werden von einem Roboter mit verschiedenen Programmen verschiedene Werkstücke bearbeitet, so erhält der Nutzer durch den Vergleich zwischen realem und augmentierten Werkstück eine einfache Möglichkeit zu prüfen, ob das richtige Bearbeitungsprogramm gewählt ist (hierzu auch weiter unten zu Fig. 13).

Das augmentierte Werkstück zeigt dem Nutzer an, an welcher Stelle der Roboter das Werkstück vermutet. Entspricht die Bahn des Roboterprogramms nicht der Lage des realen Werkstücks (z.B. aufgrund von Lagetoleranzen), so kann der Nutzer das Roboterprogramm korrigieren, indem er das augmentierte Werkstück mitsamt den zugehörigen Bahnpunkten des Roboterprogramms verschiebt und verdreht, bis eine Deckung mit dem realen Werkstück erreicht ist. Die Manipulation kann wiederum wie in Abschnitt 3 dieses Dokuments beschrieben erfolgen.

In den zuletzt beschriebenen drei Anwendungsfällen stellt die Visualisierung des Werkstücks mittels AR eine sinnvolle Zusatzinformation zum augmentierten Bahnverlauf des Roboterprogramms dar. Die Augmentierung des Werkstücks ist abhängig von der Roboterbahn (seine Position ändert sich z.B. durch Verschiebung des entsprechenden Werkstück-Koordinatensystems). Es handelt sich so um dynamische und manipulierbare roboterspezifische Informationen.

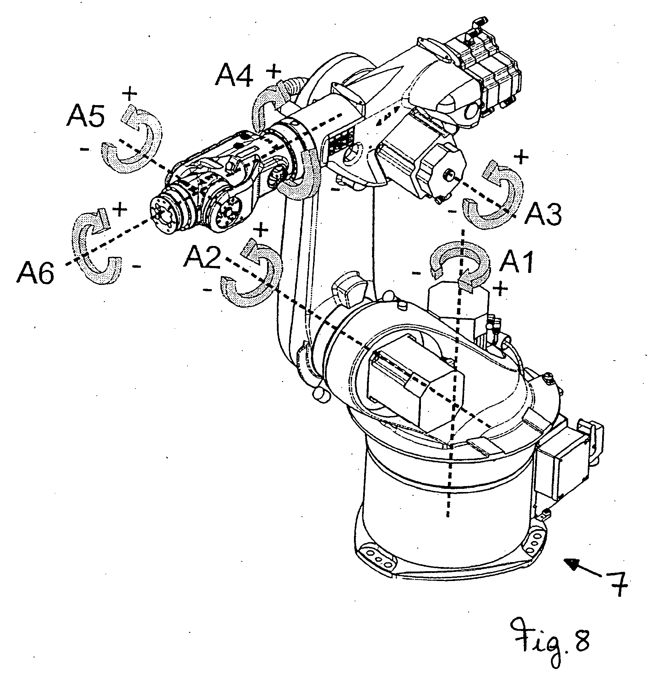

Zur Unterstützung beim manuellen achsspezifischen Verfahren eines Roboters, insbesondere mit den Verfahrtasten am Programmiergerät, können zusätzlich oder statt eines Koordinatensystems die Achsen A1 bis A6 des Roboters dargestellt werden, d.h. sie werden in das Bild des realen Roboters 7 so eingeblendet, dass sie mit dessen tatsächlichen Achsen im Bild übereinstimmen. Weiterhin kann positive und negative Drehrichtung um die entsprechenden Achsen dargestellt werden (Fig. 8). Das Visualisieren der Achsen kann auch beim manuellen kartesischen Verfahren hilfreich sein, um den Nutzer in der Nähe von singulären Gelenkkonfigurationen darauf hinzuweisen, dass eine oder mehrere Achsen bald an die Grenzen ihrer maximalen Beschleunigung bzw. Geschwindigkeit stoßen.

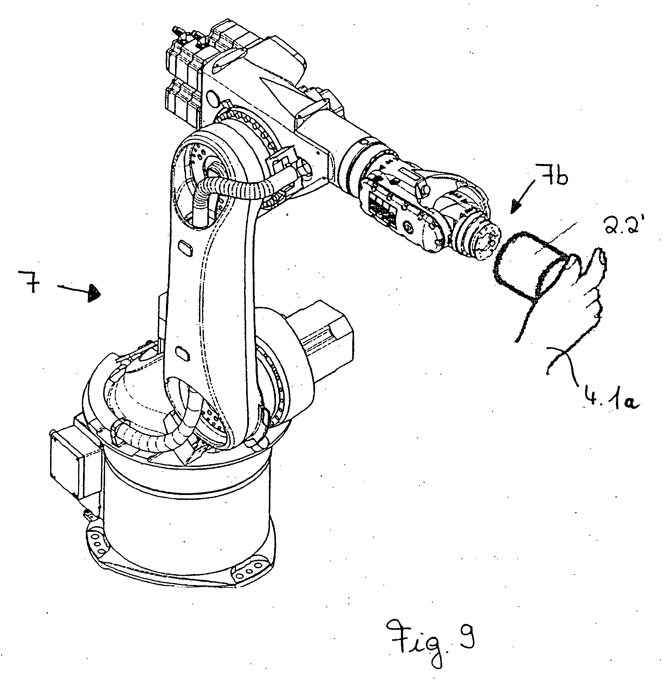

Weiterhin kann das manuelle Verfahren insbesondere mittels einer 3D-Maus 2.2 dadurch erleichtert werden, dass diese direkt unmittelbar vor dem Handflansch 7b oder dem TCP eines Roboters 7 in das Bild desselben als virtuelle 3D-Maus 2.2' eingeblendet wird. Zusätzlich kann die virtuelle Hand 4.1a eines Benutzers miteingeblendet werden (Fig. 9).

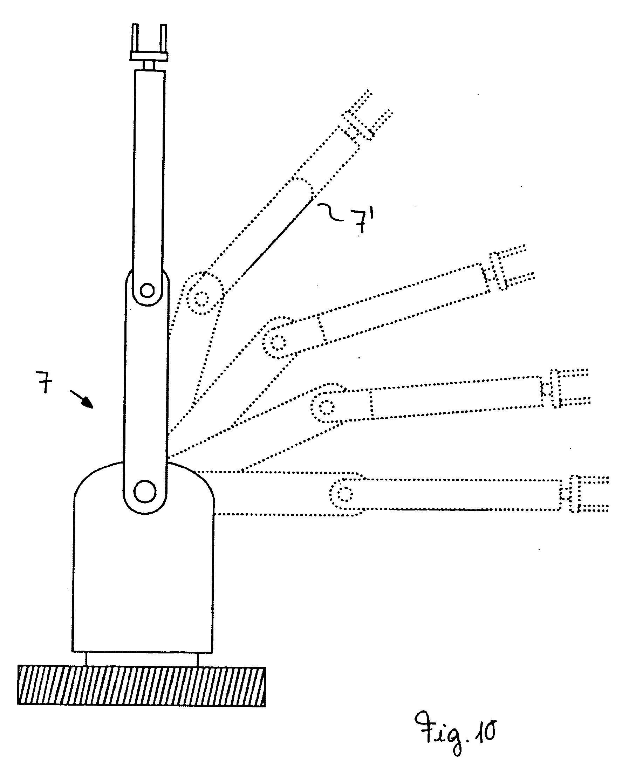

Die Fig. 10 zeigt das Bild eines realen Roboters 7 zusammen mit computergenerierten weiteren Positionen 7' und Teilen des Roboters, nämlich Schwinge, Roboterarm und Roboterhand, in verschiedenen Positionen, wodurch Gesamtarbeitsräume etc. veranschaulicht und damit ebenfalls Programmierungen eines Arbeitsablaufs des Roboters erleichtert werden können, da man für das Teachen von Bahnpunkten und zum Überprüfen einer programmierten Bahn den Roboter nicht verfahren muss, hierdurch Zeit spart und die Gefahr von Schäden an Dingen oder Personen reduziert wird.

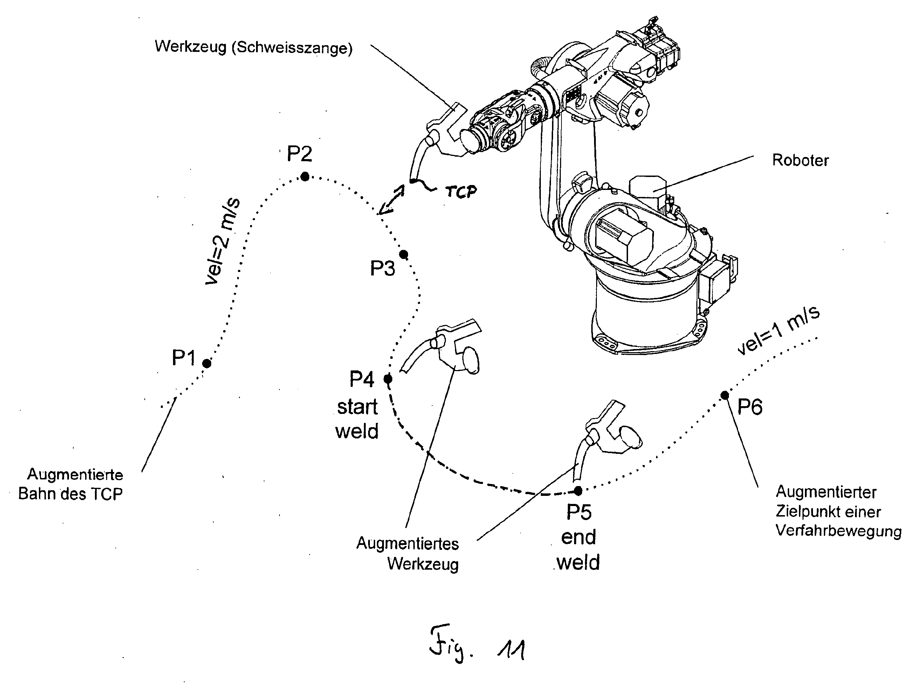

Weiterhin ist es möglich, zusammen mit dem Bild eines realen Roboters 7 und durch dessen Handflansch 7b oder den TCP gehend, eine computergenerierte Roboter-Arbeitsbahn einzublenden, gegebenenfalls zusammen mit spezifischen, alphanumerisch bezeichneten Punkten P1 bis P6 der Bahn sowie Bahngeschwindigkeiten in gewissen Bereichen, wie Bereichen zwischen zwei Punkten und schließlich auch alphanumerischen funktionellen Angaben, wie im dargestellten Ausführungsbeispiel das Öffnen und Schließen eines Greifers (Open-Gripper, Close-Gripper) an den Bahnpunkten P4 und P5 (Fig. 11).

Zusätzlich zu den alphanumerischen Informationen können auch Symbole oder auch die Orientierung des Werkzeugs in bestimmten Bahnpunkten visualisiert werden.

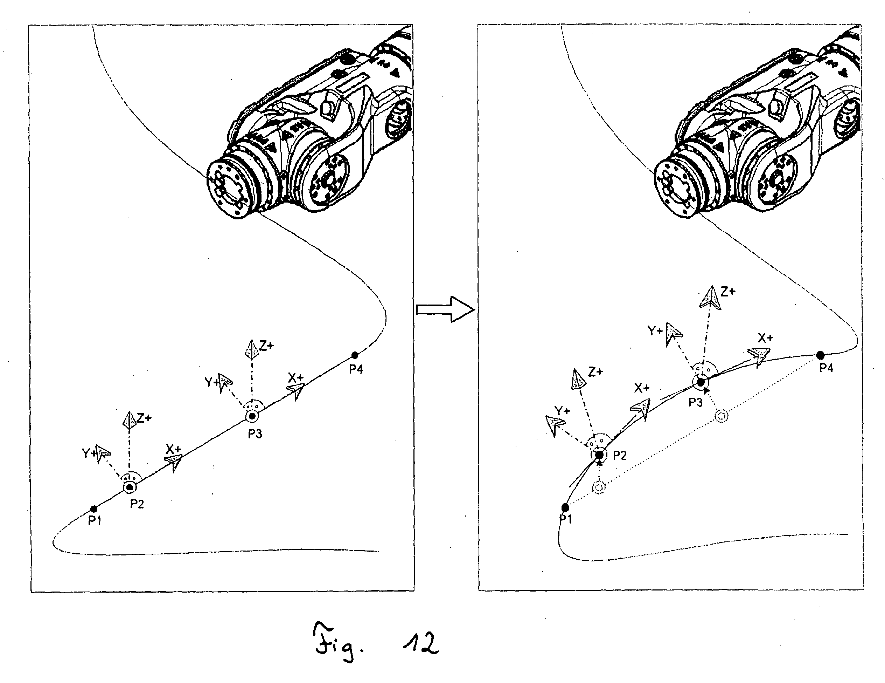

Für die Anpassung existierender Roboterprogramme können die Bahnpunkte direkt, einzeln oder in Gruppen im Raum verschoben und verdreht werden, wie dies in der Fig. 12 dargestellt ist, wobei die Vorgabe neuer Bahnpunkte oder auch ganzer neuer Programm- bzw. Bahnabläufe, ebenfalls direkt visualisiert werden können, wie dies unter Bezug auf die Fig. 5 erläutert wurde.

In Weiterbildung kann dabei vorgesehen sein, dass zusammen mit dem Bild des realen Bauteils 8 ein computergeneriertes Bauteil 8' visualisiert wird (Fig. 13). Hierdurch können bei Abweichungen der Bauteillage die Lage von Gruppen von Bahnpunkten im Roboterprogramm korrigiert werden, indem das augmentierte Werkstück 8' gemeinsam mit Bahnpunkten oder der Bahn des Roboters, die sich darauf beziehen, verschoben und verdreht wird, bis das augmentierte Werkstück 8' mit dem realen Werkstück 8 zur Deckung kommt.

Weiterhin ist es möglich, Arbeitsbereiche einer aus mehreren Roboter bestehenden realen Anlage zu visualisieren und diese interaktiv anzupassen. Die Fig. 14 zeigt das reale Bild dreier miteinander zusammenwirkender Roboter 7.1, 7.2, 7.3 zusammen mit der computergenerierten Darstellung ihrer Gasamtarbeitsräume 7.1', 7.2', 7.3'. Die Visualisierung des erreichbaren Gesamtarbeitsraums eines Robotersystems kann vorteilhaft sein, um mögliche Kollisionsbereiche von eng stehenden Robotersystemen zu erkennen. Auch die direkte Anlegung oder Anpassung der Roboterbahn wird so durch die Visualisierung des erreichbaren Arbeitsraums wirkungsvoll unterstützt.

Weiterhin können Bereiche visualisiert und angepasst werden, in die der Roboter nicht eindringen oder die er nicht verlassen darf. Es können zudem auch Arbeitsbereiche behandelt werden, die von mehreren Robotersystemen (oder anderen Anlagenkomponenten) gemeinsam genutzt werden, so dass ihre Nutzung verwaltet werden kann. Auch virtuelle Führungsmechanismen, die beim handgeführten Betrieb von Robotersystemen eingesetzt werden, können einfach festgelegt, visualisiert und angepasst werden. Die Typen von Arbeitsbereichen können jeweils vom Programmierer definiert oder auch durch eine entsprechende Software automatisch festgelegt werden.

Der definierte Arbeitsbereich kann sich jeweils auf einen definierten Punkt der Roboterstruktur, vorzugsweise den TCP, beziehen oder alternativ auf die Außenkontur des Roboters oder eines Teils desselben.

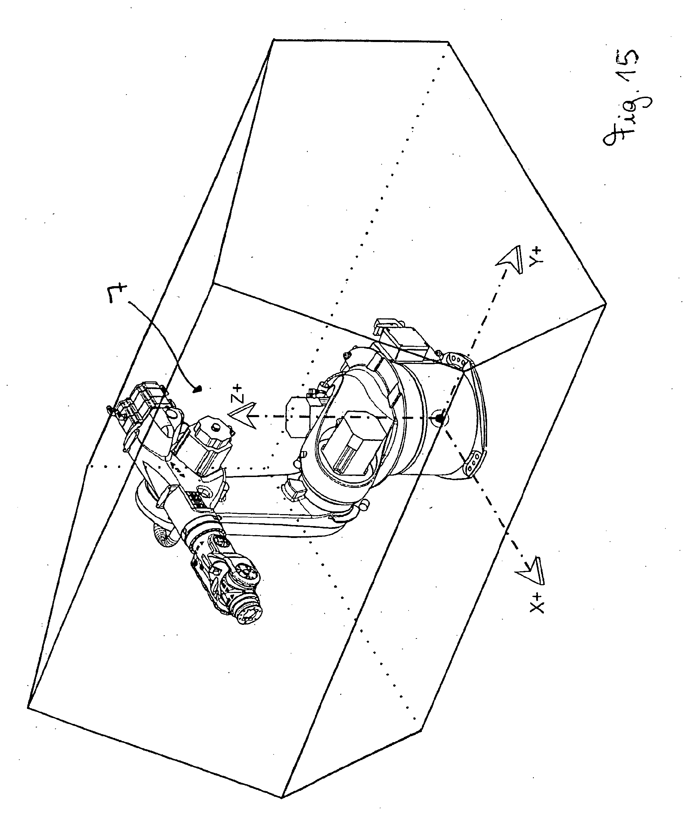

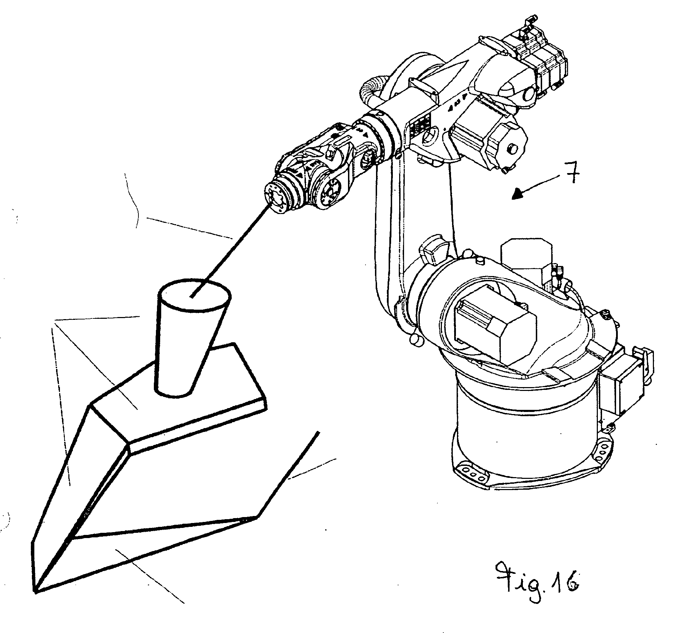

Die Visualisierung eines Arbeitsbereichs kann z.B. durch das Einblenden eines dem Arbeitsbereich entsprechenden Körpers derselben Größe und Geometrie erfolgen (Fig. 15). Die Visualisierung von virtuellen Führungsmechanismen bzw. -korridoren kann in ähnlicher Form erfolgen, wobei entsprechende drei-, zwei- oder eindimensionale Körper Verwendung finden, wie dies in Fig. 16 dargestellt ist. Alternativ kann es auch vorteilhaft sein, eine äquivalente mechanische Struktur zu visualisieren, die eine entsprechende Einschränkung der Bewegungsmöglichkeiten beinhaltet, wie die Visualisierung von Führungsschienen, Gelenkmechanismen oder dergleichen.

Zur Anpassung visualisierter Arbeitsräume können Eckpunkte oder Hilfspunkte im Raum individuell korrigiert werden; alternativ können Arbeitsräume auch angepasst werden, indem ihre Seitenflächen individuell verschonben und verdreht werden, wie dies unter Bezug insbesondere auf die Fig. 4a bis 4c beschrieben wurde.

Die erfindungsgemäße AR-Visualisierung von Arbeitsräumen und virtuellen Führungsmechanismen unterstützt den Nutzer bei der Festlegung derselben, z.B. durch die Einblendung der zulässigen oder unzulässigen Arbeitsvolumina, wie das in den Fig. 15 und 16 dargestellt ist. Während der Programmierung ist eine Möglichkeit gegeben, die Arbeitsräume oder virtuelle Führungsmechanismen zu manipulieren, beispielsweise über das "Verschieben" von Eckpunkten mit den Eingabeelementen am Programmierhandgerät.

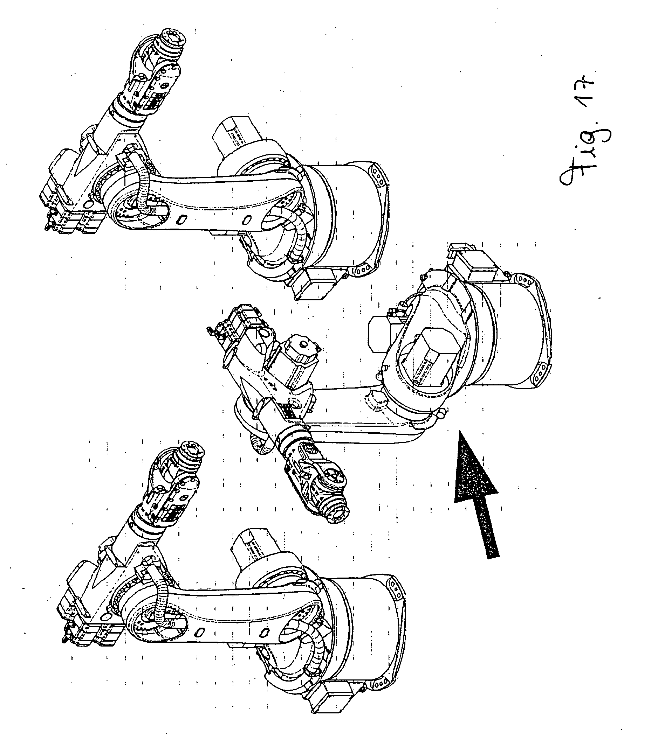

Wenn mit einem Programmierhandgerät mehrere Roboter sukzessive programmiert werden können, ist es möglich, den Programmiergerätmembran zugeordneten Roboter, zu kennzeichnen, beispielsweise durch ein graphisches Element, wie einen Pfeil oder dergleichen (Fig. 17). Das gleiche ist der Fall, wenn mittels eines Programmierhandgeräts verschiedene Roboter nacheinander oder gleichzeitig gesteuert werden können. Auch in diesem Fall ist es vorteilhaft, den bzw. die aktuell dem Programmierhandgerät zugeordneten Roboter dem Nutzer visuell kenntlich zu machen. Zusätzlich können Robotersysteme derart an- bzw. abgewählt werden, indem der Nutzer eingeblendete virtuelle Eingabeelemente berührt, oder auch des Programmiergeräts auf den entsprechenden Roboter ausrichtet. Auch die prinzipielle Anwählbarkeit eines Roboters bzw. seine fehlende Anwendbarkeit, wenn der Roboter z.B. nicht zu der Gruppe der Roboter gehört, die von einem gegebenen Programmierhandgerät aus kontrolliert werden können, kann dem Nutzer direkt am Bild des realen Roboters durch eine entsprechende Markierung öder Kennzeichnung mitgeteilt werden. Darüber hinaus lassen sich auch der aktuelle Zustand von Robotersystemen visualisieren und gegebenenfalls ändern, wie die gewählte Betriebsart, Zustand der Antriebe (eingeschaltet, ausgeschaltet) oder dergleichen.

### Bezugszeichenliste

- 1: Vorrichtung
- 1.1: Sichtgerät
- 1.2: Kamera
- 1.3: Brillengläser
- 1.4: Kabel
- 2: Programmierhandgerät
- 2.1: Verfahrtasten
- 2.2: 6D-Maus
- 2.3: Bildschirm
- 3: Sensorsystem
- 3.1: Stationäres Empfangssystem
- 3.2: Eingangselement
- 4: Nutzer
- 4.1, 4,1': Hand
- 4.1a: virtuelle Wand
- 5: Verarbeitungseinheit
- 5.1: Bildgenerierungseinheit
- 5.2: Manipulationseinheit
- 6: Robotersteuerung
- 7: Roboter
- 7': weitere Positionen
- 7.1, 7.2, 7.3: miteinander zusammenwirkende Roboter
- 7.1', 7.2', 7.3': Arbeitsbereiche
- 7a: Sockel
- 7b: Handflansch
- 8: Werkstück
- 8': simuliertes Werkstück

- P1 - P6: Bahnpunkte
- AO, AO': Augmentiertes Raumobjekt

## Patentansprüche

1. Verfahren zum Einblenden rechnergenerierter Informationen in ein von einem Bildempfangsgerät (A.2, 1.2) erfasstes Bild der realen Umwelt auf einem Sichtgerät (1.1), wobei eine Bestimmung von Ort und Ausrichtung des Bildempfangsgeräts (A.2, 1.2) erfolgt und dieser Bestimmung entsprechende roboterspezifische Informationen auf dem Sichtgerät (1.1) über das Bild der realen Umwelt auf dem Sichtgerät überblendet werden, wobei als roboterspezifische Informationen virtuelle oder augmentierte roboterspezifische Raumobjekte (AO, AO') auf dem Sichtgerät angezeigt und über das Bild der realen Umwelt überblendet werden, **dadurch gekennzeichnet, dass** durch Manipulieren dieser virtuellen oder augmentierten roboterspezifischen Raumobjekte (AO, AO') mittels eines Bedienelements eines Programmierhandgeräts eines Roboters dessen roboterspezifische Daten manipuliert werden.

2. Verfahren nach Anspruch 1, **dadurch gekennzeichnet, dass** mindestens ein roboterspezifisches Koordinatensystem und/oder Roboterachsen eingeblendet werden.

3. Verfahren nach einem der vorangehenden Ansprüche, **dadurch gekennzeichnet, dass** das Bild eines zumindestens in zwei Dimensionen bewegbaren Bedienungselements eines Roboter-Programmierhandgerätes (2), insbesondere in Zuordnung und Ausrichtung eines Roboter-Handflansches (7b) eingeblendet wird.

4. Verfahren nach einem der vorangehenden Ansprüche, **dadurch gekennzeichnet, dass** zumindestens ein von einem Roboter (7) bewegtes Werkzeug, vorzugsweise mehrere Roboterelemente, in einer Arbeitsumgebung eines Roboters (7) eingeblendet werden.

5. Verfahren nach einem der vorangehenden Ansprüche, **dadurch gekennzeichnet, dass** eine bei einem Roboter (7) im Rahmen eines Arbeitsvorgangs zu durchlaufende Roboterbahn (P1-P6), insbesondere die des Tool-Center-Points, gegebenenfalls mit Zusatzinformationen eingeblendet werden.

6. Verfahren nach einem der vorangehenden Ansprüche, **dadurch gekennzeichnet, dass** Bahnpunkte (P1-P6) eingeblendet werden, dass die Position der Bahnpunkte (P1-P6) im Raum veränderbar ist und jeweils eine der Position der Gesamtheit der Bahnpunkte (P1-P6) entsprechende Roboter-Bahnkurve (P1-P6) eingeblendet wird.

7. Verfahren nach einem der vorangehenden Ansprüche, **dadurch gekennzeichnet, dass** das Bild eines von einem Roboter (7) zu bearbeitenden Werkstücks (8), gegebenenfalls mit diesem zugeordneten Achsen eingeblendet wird.

8. Verfahren nach einem der vorangehenden Ansprüche, **dadurch gekennzeichnet, dass** zur Anpassung einer Roboterbahn (P1-P6) an die Position eines erfassten realen Werkstücks (8) ein virtuelles Bild (8') des Werkstücks (8) mit einer an dieses angepassten Roboterbahn (P1-P6) eingeblendet wird, so dass durch Überlagerung des virtuellen Werkstückbildes (8') mit dem Bild des realen Werkstückes (8) die durchzuführende Roboterbahn (P1-P6) an die Position des realen Werkstücks (8) anpassbar ist.

9. Verfahren nach einem der vorangehenden Ansprüche, **dadurch gekennzeichnet, dass** ein durch einen Roboter (7) erreichbarer Arbeitsraum und/oder ein zulässiger Arbeitsraum (7.1', 7.2', 7.3') auf dem Sichtgerät (1.1) visualisiert wird.

10. Verfahren nach einem der vorangehenden Ansprüche, **dadurch gekennzeichnet, dass** Bewegungskorridore eines Roboter-Werkzeugs, einer Roboter-Hand und/oder weiterer Roboterelemente auf dem Sichtgerät (1.1) visualisiert werden.

11. Verfahren nach einem der vorangehenden Ansprüche, **dadurch gekennzeichnet, dass** permanente und/oder momentane Zuordnungen mindestens eines Programmierhandgerätes (2) zumindest eines Roboters (7) visualisiert werden.

12. Verfahren nach einem der vorangehenden Ansprüche, **dadurch gekennzeichnet, dass** Ort und Ausrichtung der Anzeige mittels festen Markierungen im Raum erfasst werden.

13. Verfahren nach einem der vorangehenden Ansprüche, **dadurch gekennzeichnet, dass** die roboterspezifischen computergenerierten Informationen in einer von einem Benutzer zu tragenden Datenbrille (1.3) eingeblendet werden.

14. Verfahren nach einem der Ansprüche 1 bis 12, **dadurch gekennzeichnet, dass** die roboterspezifischen computergenerierten Informationen auf einem transparenten Bildschirm (2.3) als Sichtgerät (1.1) eingeblendet werden.

15. Verfahren nach einem der Ansprüche 1 bis 12, **dadurch gekennzeichnet, dass** die roboterspezifischen computergenerierten Informationen zusammen mit optoelektronisch aufgenommenen Informationen auf einem graphikfähigen Bildschirm (2.3) als Sichtgerät (1.1) dargestellt werden.

16. Verfahren nach einem der vorangehenden Ansprüche, **dadurch gekennzeichnet, dass** die roboterspezifischen computergenerierten Informationen zusammen mit optoelektronisch aufgenommenen Informationen auf einem Sichtgerät (1.1) in Form eines graphikfähigen Bildschirms (2.3) eines Programmierhandgeräts (2) für einen Roboter (7) dargestellt werden.

17. Verfahren nach einem der vorangehenden Ansprüche, **dadurch gekennzeichnet, dass** die roboterspezifischen computergenerierten Informationen zusammen mit optoelektronisch aufgenommenen Informationen auf einem mit einem Programmierhandgerät (2) eines Roboters (7) verbindbaren graphikfähigen Bildschirm (2.3) als Sichtgerät (1.1) dargestellt werden.

18. Vorrichtung zum Visualisieren computergenerierter Informationen in einem Bild der realen Umwelt, mit einem Bildempfangsgerät (A.2, 1.2) und einem Sichtgerät (1.1), **gekennzeichnet durch** eine Einrichtung zur Bestimmung von Ort und Ausrichtung (Pose) des Bildempfangsgeräts (A.2, 1.2) und **durch** eine Einrichtung zum Überblenden der Bestimmung entsprechender roboterspezifischer Informationen über das Bild der realen Umwelt auf dem Sichtgerät (1.1) und einer Anzeige zum Einblenden und/oder Visualisieren, die zur Durchführung eines der Verfahren gemäß den Patentansprüchen 1 bis 17 eingerichtet ist.

## Claims

1. Method for inserting computer-generated information into an image of the real environment determined by an image receiving unit (A.2, 1.2) on a viewing device (1.1), wherein the position and orientation of the image receiving unit (A.2, 1.2) are determined and robot-specific information corresponding to this determination on the viewing device (1.1) is inserted over the image of the real environment on the viewing device, wherein virtual or augmented robot-specific spatial objects (AO, AO') are displayed on the viewing device as robot-specific information and are inserted over the image of the real environment, **characterised in that** by manipulating said virtual or augmented robot-specific spatial objects (AO, AO') by means of an operating element of a programming hand device of a robot the robot-specific data thereof is manipulated.

2. Method according to claim 1, **characterised in that** at least a robot-specific coordinate system and/or robot axes are inserted.

3. Method according to one of the preceding claims, **characterised in that** the image of a control element of a robot programming hand device (2) movable in at least two dimensions is inserted, in particular in the allocation and alignment of a robot hand flange (7b).

4. Method according to one of the preceding claims, **characterised in that** at least one tool moved by a robot (7), preferably a plurality of robot elements, are inserted in a working environment of a robot (7).

5. Method according to one of the preceding claims, **characterised in that** a robot path (P1-P6) to be covered by a robot (7) during a working process, in particular that of the tool centre point, is possibly superimposed with additional information.

6. Method according to one of the preceding claims, **characterised in that** path points (P1-P6) are inserted, **in that** the position of the path points (P1-P6) can be varied in space and in each case a robot path curve (P1-P6) corresponding to the position of all of the path points (P1-P6) is inserted.

7. Method according to one of the preceding claims, **characterised in that** the image of a workpiece (8) to be machined by a robot (7) is possibly inserted with axes associated therewith.

8. Method according to one of the preceding claims, **characterised in that** to adjust a robot path (P1-P6) to the position of a detected, real workpiece (8) a virtual image (8') of the workpiece (8) with a robot path (P1-P6) adjusted thereto is inserted, so that by inserting the virtual workpiece image (8') with the image of the real workpiece (8) it is possible to adjust the robot path (P1-P6) to be executed to the position of the real workpiece (8).

9. Method according to one of the preceding claims, **characterised in that** an operating area reachable by a robot (7) and/or a permitted operating area (7.1', 7.2', 7.3') is displayed on the viewing device (1.1).

10. Method according to one of the preceding claims, **characterised in that** movement corridors of a robot tool, a robot hand and/or additional robot elements are displayed on the viewing device (1.1).

11. Method according to one of the preceding claims, **characterised in that** permanent and/or instantaneous allocations of at least one programming hand device (2) of at least one robot (7) are visualized.

12. Method according to one of the preceding claims, **characterised in that** the location and orientation of the display are determined by fixed markings in space.

13. Method according to one of the preceding claims, **characterised in that** the robot-specific, computer-generated information is inserted into data goggles (1.3) to be worn by a user.

14. Method according to one of claims 1 to 12, **characterised in that** the robot-specific, computer-generated information is inserted onto a transparent screen (2.3) as the viewing device (1.1).

15. Method according to one of claims 1 to 12, **characterised in that** the robot-specific, computer-generated information is displayed together with optoelectronically recorded information on a graphics screen (2.3) as the viewing device (1.1).

16. Method according to one of the preceding claims, **characterised in that** the robot-specific, computer-generated information is displayed together with optoelectronically recorded information on a viewing device (1.1) in the form of a graphics screen (2.3) of a programming hand device (2) for a robot (7).

17. Method according to one of the preceding claims, **characterised in that** the robot-specific, computer-generated information is displayed together with optoelectronically recorded information on a graphics screen (2.3) as the viewing device (1.1) connectable to a programming hand device (2) of a robot (7).

18. Device for visualizing computer-generated information in an image of the real environment comprising an image receiving device (A.2, 1.2) and a viewing device (1.1), **characterised by** a device for determining the position and orientation (pose) of the image receiving device (A.2, 1.2) and by a device for inserting the definition of corresponding robot-specific information over the image of the real environment on the viewing device (1.1) and a display for inserting and/or visualising which is set up for performing one of the methods according to claims 1 to 17.

## Revendications

1. Procédé pour incruster des informations générées par ordinateur sur un appareil d'affichage, dans une image de l'environnement réel saisie par un appareil récepteur d'images (A.2, 1.2), dans lequel a lieu une détermination de la localisation et de l'orientation de l'appareil récepteur d'images (A.2, 1.2) et des informations spécifiques aux robots correspondant à cette détermination, étant superposées sur l'appareil d'affichage (1.1), sur l'image de l'environnement réel sur l'appareil d'affichage, dans lequel des objets dans l'espace (AO, AO') spécifiques aux robots, virtuels ou augmentés, servant d'informations spécifiques aux robots, sont affichés sur l'appareil d'affichage et superposés sur l'image de l'environnement réel, **caractérisé en ce que** par la manipulation de ces objets dans l'espace (AO, AO') spécifiques aux robots, virtuels ou augmentés, au moyen d'un élément de commande d'un appareil manuel de programmation d'un robot, on peut manipuler ses données spécifiques aux robots.

2. Procédé selon la revendication 1, **caractérisé en ce qu'**au moins un système de coordonnées spécifique aux robots et/ou des axes de robot sont incrustés.

3. Procédé selon l'une des revendications précédentes, **caractérisé en ce que** l'image d'un élément de commande déplaçable au moins dans deux dimensions, d'un élément de commande d'un appareil manuel de programmation (2) d'un robot, est incrusté en particulier en ce qui concerne l'affectation et l'orientation d'une bride de main (7b) de robot.

4. Procédé selon l'une des revendications précédentes, **caractérisé en ce qu'**au moins un outil déplacé par un robot (7), de préférence plusieurs éléments de robot, sont incrustés dans un environnement de travail d'un robot (7).

5. Procédé selon l'une des revendications précédentes, **caractérisé en ce qu'**une trajectoire de robot (P1-P6) à parcourir par un robot (7) dans le cadre d'une opération de travail, en particulier celle du point central d'outil, est incrustée le cas échéant avec des informations supplémentaires.

6. Procédé selon l'une des revendications précédentes, **caractérisé en ce que** des points de trajectoire (P1-P6) sont incrustés, **en ce que** la position des points de trajectoire (P1-P6) peut varier dans l'espace et une trajectoire de robot (P1-P6) correspondant à la position respective de la totalité des points de trajectoire (P1-P6) est incrustée.

7. Procédé selon l'une des revendications précédentes, **caractérisé en ce que** l'image d'une pièce d'oeuvre (8) à usiner par un robot (7) est incrustée, le cas échéant avec des axes affectés à celle-ci.

8. Procédé selon l'une des revendications précédentes, **caractérisé en ce que** pour adapter une trajectoire de robot (P1-P6) à la position d'une pièce d'oeuvre (8) réelle saisie, une image virtuelle (8') de la pièce d'oeuvre (8) est incrustée avec une trajectoire de robot (P1-P6) adaptée à celle-ci, de telle sorte que par superposition de l'image virtuelle (8') de la pièce d'oeuvre avec l'image de la pièce d'oeuvre (8) réelle, la trajectoire de robot (P1-P6) à effectuer peut être adaptée à la position de la pièce d'oeuvre (8) réelle.

9. Procédé selon l'une des revendications précédentes, **caractérisé en ce qu'**un espace de travail accessible par un robot (7) et/ou un espace de travail de sécurité (7.1', 7.2', 7.3') est visualisé sur l'appareil d'affichage (1.1).

10. Procédé selon l'une des revendications précédentes, **caractérisé en ce que** des corridors de déplacement d'un outil de robot, une main de robot et/ou d'autres éléments de robot sont visualisés sur l'appareil d'affichage (1.1).

11. Procédé selon l'une des revendications précédentes, **caractérisé en ce que** des affectations permanentes et/ou momentanées d'au moins un appareil manuel de programmation (2) d'au moins un robot (7) sont visualisés.

12. Procédé selon l'une des revendications précédentes, **caractérisé en ce que** la localisation et l'orientation de l'affichage sont saisis au moyen de marquages fixes dans l'espace.

13. Procédé selon l'une des revendications précédentes, **caractérisé en ce que** les informations spécifiques aux robots et générées par ordinateur sont incrustées sur des lunettes à réalité augmentée (1.3) qui doivent être portées par l'utilisateur.

14. Procédé selon l'une des revendications 1 à 12, **caractérisé en ce que** des informations spécifiques aux robots et générées par ordinateur sont incrustées sur un écran transparent (2.3) servant d'appareil d'affichage (1.1).

15. Procédé selon l'une des revendications 1 à 12, **caractérisé en ce que** des informations spécifiques aux robots et générées par ordinateur sont représentées conjointement avec des informations recueillies de manière optoélectronique sur un écran graphique (2.3) servant d'appareil d'affichage (1.1).

16. Procédé selon l'une des revendications précédentes, **caractérisé en ce que** les informations spécifiques aux robots et générées par ordinateur sont représentées conjointement avec des informations recueillies de manière optoélectronique sur un appareil d'affichage (1.1) sous forme d'écran graphique (2.3) d'un appareil manuel de programmation (2) pour un robot (7).

17. Procédé selon l'une des revendications précédentes, **caractérisé en ce que** les informations spécifiques aux robots et générées par ordinateur sont représentées conjointement avec des informations recueillies de manière optoélectronique sur un écran graphique (2.3) servant d'appareil d'affichage (1.1) qui peut être relié avec un appareil manuel de programmation (2) pour un robot (7).

18. Dispositif de visualisation d'informations générées par ordinateur dans une image de l'environnement réel, comportant un appareil récepteur d'images (A.2, 1.2) et un appareil d'affichage (1.1), **caractérisé par** un dispositif de détermination de la localisation et de l'orientation (pose) de l'appareil récepteur d'images (A.2, 1.2) et par un dispositif servant à superposer la détermination d'informations spécifiques aux robots correspondantes sur l'image de l'environnement réel sur l'appareil d'affichage (1.1), et comportant un affichage destiné à afficher et/ou visualiser, lequel est prévu pour mettre en oeuvre un des procédés selon l'une des revendications 1 à 17.
